(19) **Europäisches Patentamt**
**European Patent Office**
**Office européen des brevets**

(11) **EP 3 057 333 B1**

(12) **EUROPEAN PATENT SPECIFICATION**

(45) Date of publication and mention of the grant of the patent:
**24.07.2019 Bulletin 2019/30**

(51) Int Cl.:
*G10L 25/60* (2013.01)     *H04M 11/02* (2006.01)
*G08C 23/02* (2006.01)

(21) Application number: **14852511.6**

(22) Date of filing: **17.04.2014**

(86) International application number:
**PCT/CN2014/075632**

(87) International publication number:
**WO 2015/051630 (16.04.2015 Gazette 2015/15)**

(54) **DETECTION METHOD AND DETECTION SYSTEM FOR AUDIO TRANSMISSION CHARACTERISTIC OF BUILDING INTERCOM SYSTEM**

VERFAHREN UND SYSTEM ZUR ERKENNUNG VON SCHALLÜBERTRAGUNGSEIGENSCHAFTEN ZUM AUFBAU EINES GEGENSPRECHSYSTEMS

PROCÉDÉ DE DÉTECTION ET SYSTÈME DE DÉTECTION POUR UNE CARACTÉRISTIQUE DE TRANSMISSION AUDIO D'UN SYSTÈME D'INTERCOMMUNICATION D'UN BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2013 CN 201310475819**

(43) Date of publication of application:
**17.08.2016 Bulletin 2016/33**

(73) Proprietor: **The Third Research Institute of Ministry of Public Security**
**Shanghai 200031 (CN)**

(72) Inventors:
• **RONG, Ling**
  **Shanghai 200031 (CN)**
• **BAO, Yiming**
  **Shanghai 200031 (CN)**
• **ZHANG, Zhenyi**
  **Shanghai 200031 (CN)**
• **WANG, Lijuan**
  **Shanghai 200031 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) References cited:
**EP-B1- 0 981 888          WO-A1-2012/093352**
**WO-A1-2013/007304      CN-A- 102 737 480**
**CN-A- 102 739 320        CN-A- 103 607 669**
**CN-Y- 201 226 579         CN-Y- 201 226 579**
**US-A1- 2012 316 869**

• **AN, HANLIANG: 'Analysis Principle and Test of Audio of Mobile Communication Terminal' DIGITAL COMMUNICATION WORLD vol. 1, 2013, XP008183477**
• **HUANG, HUIXIONG: 'The Building of Test Platform for Mobile Terminal Audio' ELECTRONICS QUALITY vol. 6, 01 September 2008, XP008183479**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

TECHNICAL FIELD

The present application relates to the field of voice transmission detection, and more particularly, to a detection method for acoustic transmission characteristics of building intercom system.

BACKGROUND

In the prior art, for a building intercom system applied to residential building entrance control, it needs to detect (check) or test whether voice transmission and video transmission and the like of each equipment of the building intercom system conform to various specified indexes. Only when the results acquired from the detection or testing conform to various specified standard requirements, it can be guaranteed that the building intercom system is available and easy to use, and thus these equipments may be produced and applied actually. Along with continuous progress of various technologies for the building intercom system, the requirements for performances in each aspect of the system are also continuously updated and in progress as well. Therefore, the technologies for detecting (checking) the building intercom system are also improved continuously so that the accuracy of the detecting and checking results can be improved.

In detection or testing of the building intercom system, the detection (checking) or testing of the acoustic transmission characteristics of the system is a very important part of the detection of the whole intercom system. As is known, a test method for testing the acoustic transmission quality of the building intercom system is a test method which is specially used for building intercom system products and used for a complete set of overall sound tests for evaluating acoustic transmission quality. The test method comprises methods for testing and calculating five technical parameters (such as loudness rating, frequency response, distortion, signal-to-noise ratio and sidetone masking rating), referring to testing and calculation of the five technical parameters in "technical requirements of networking video intercom system GA/T678-2007 (9.3 call transmission characteristic checking)" and "general technical conditions of building intercom system and elec-control anti-burglary door GA/T72-2005 (7.4 call transmission characteristics), as well as methods for detecting (checking) or testing the acoustic transmission characteristics of the building intercom system therein. In addition, the "European standard EN50486-2012"which has been published and executed for ten years and was revised in 2012 is used in the detection of the acoustic transmission characteristics of the intercom system in Europe, and the method for testing acoustic transmission characteristics in this standard is not different from the original standard. The specific test method is A.3 Audio tests in EN 50486. As for a detection method in "European standard EN50486-2012", as described in 1.scope of the standard, "this European Standard is not applicable to security systems, anti-theft, anti-attack devices and CCTV surveillance systems, and access control systems for use in security applications", it has been indicated that the detection method mainly aims at a product in non-security consideration, i.e., the method is mainly aiming at a one-to-one doorbell system, and a voice detection method is still based on the product more than 10 years ago. Plenty of products with noise suppression and echo cancellation functions cannot be tested normally through the method.

A similar apparatus is for example disclosed in document WO 2012/093352 A1.

In the aforementioned methods for detecting acoustic transmission characteristics of the existing building intercom system, the following defects which cause the detection results to be inaccurate arise:

(1) In the detection of acoustic transmission characteristics, a real environment needs to be simulated as far as possible, and thus a sound source, namely a standard test sound source, is required for simulating voices in the real environment, namely during simulation and application of the building intercom system. In the prior art, single sounds and sine wave frequency sweep sounds are adopted as standard test sound sources, or pink noise and white noise are adopted as standard sound sources. The single sounds are test sounds (EN50486) of five single frequency points including 630Hz+/-5Hz, 1kHz+/-5Hz, 1.5kHz+/-5Hz, 2.5kHz+/-5Hz and 3.4kHz+/-5Hz; and signals of the frequency sweep sounds are single sound frequency sweep signals (GA/T72-2005 and GA/T678-2007) with the equal amplitude within a frequency range of 200-3.4k Hz. For equipments (products) in part of building intercom systems with functions of noise suppression and echo cancellation, the single sounds and the frequency sweep sounds are possibly regarded as noise and thus they are inhibited, so that the sound sources cannot serve as voices to be effectively transmitted through the equipments, and thus the accurate detection and testing cannot be performed. The pink noise and the white noise serve as voice sources/sound sources (EN50486) and they are noises themselves, and it is easier for them to be inhibited automatically by the equipments (products) in most of building intercom systems with functions of noise suppression and echo cancellation, thus they cannot serve as voices to be transmitted and accordingly cannot be tested normally and accurately.

(2) In the detection of acoustic transmission characteristics, a real environment needs to be simulated as far as possible. In existing detection methods, the building intercom system and equipments thereof are generally detected only in the voice transmission process, and the actual equipment usage or installation environment is neglected. For example, during the design of the visitor call point and the user receiver unit of the building intercom system, a loudspeaker and a pickup are arranged on the side and/or the back in consideration of aesthetic and structure while in actual use, the visitor call point and the user receiver unit and the like are installed on the wide wall. Therefore, in actual application, the wall has a reflection effect on sound signals, and accordingly good voice loudness and effects are possibly generated. However, in some existing detection methods (GA/T72-2005 and GA/T678-2007), the reflection effect on the sound signals is not considered in the actual usage of simulation. In some other existing methods (EN50486), the consistent reflection effect cannot be generated for sound signals simulation, so that the detection effect does not conform to the actual use effect. As a result, the detection results have large deviation and they are inaccurate.

(3) In the detection of the acoustic transmission characteristics, the sound distortion testing is one of important step for determining equipment (product) performance (or quality) and represents fidelity performance of voice transmission. In the prior art, the non-linear distortion of acoustic transmission is tested, i.e., the sound signals received by the receiving end are distorted due to system nonlinearity. The distortion is expressed with the percentage of the harmonic component of the sound signals received by the receiving end relative to the fundamental component. However, in this method, the influence on sound transmission caused by distortion resulting from background noise of system equipments is not considered, so that the actual distortion conditions of products cannot be reflected comprehensively, the detection results are inaccurate, and the quality of equipment cannot be reflected accurately.

**SUMMARY**

Based on the foregoing defects in the related art, the object of the present application is to mainly provide a detection method for acoustic transmission characteristics of building intercom system, so as to solve the problems of increasing the accuracy of detecting the acoustic transmission characteristics of an analog (bus-system) building intercom system, and improve the precision of the detection results, or the like.

In order to solve the foregoing technical problems, the object of the present application is fulfilled through the following technical solutions.

The present application provides a detection system for acoustic transmission characteristics of building intercom system, which at least includes a sound source portion, a detected pathway, a measuring device and a calculating device, wherein: the sound source portion produces specific voice signals, wherein the specific voice signal includes a P.50 simulation voice signal or a P.501 human voice signal of the International Telecommunication Union-Telecommunication Standardization Sector ITU-T; the detected pathway includes a first telephone, a second telephone and a communication link connected with the first telephone and the second telephone in a detected building intercom system; wherein, the detected pathway is associated with the sound source portion, for inputting the specific voice signal into the detected pathway as an input voice signal, transmitting the specific voice signal in the detected pathway, and outputting the specific voice signal as a detected output voice signal; the measuring device measures a sound pressure related to the detected output voice signal based on the detected output voice signal; and the calculating device calculates an acoustic characteristic parameter according to the measured sound pressure related to the detected output voice signal, so as to determine the acoustic transmission characteristics of the detected pathway.

Corresponding to the foregoing detection system, the present application also provides a corresponding detection method for acoustic transmission characteristics of building intercom system, including: producing a specific voice signal by a sound source portion, inputting the specific voice signal into a detected pathway as an input voice signal, transmitting the specific voice signal in the detected pathway, and outputting the specific voice signal as a detected output voice signal; wherein, the specific voice signal includes a P.50 simulation voice signal or a P.501 human voice signal of the International Telecommunication Union-Telecommunication Standardization Sector ITU-T; and measuring a sound pressure related to the detected output voice signal based on the detected output voice signal, and calculating an acoustic characteristic parameter according to the measured sound pressure related to the detected output voice signal, so as to determine the acoustic transmission characteristics of the detected pathway.

Compared with the prior art, the technical solutions according to the present application have the following advantageous effects.

By improving the testing points, that is sound source and back board, in the detection method, the collection of the detected acoustic signal is more accurate, so that the accuracy of detecting the five parameters as loudness rating, frequency response, distortion, signal to noise ratio, and sidetone masking rating is greatly increased, so that the detection result is closer to the actual using effect. By improving the testing point, that is acoustic distortion, in the detection method, the testing result of the acoustic distortion reflects the quality of equipment more truly. By the improvements of three testing points in the detection method, the accuracy of the detection result is entirely increased, and the detection precision is improved.

## BRIEF DESCRIPTION OF THE DRAWINGS

The drawings illustrated herein are intended to provide further understanding of the present application, constituting a part of the present application. Exemplary embodiments and explanations of the present application here are only for explanation of the present application, but are not intended to limit the present invention. In the drawings:

Fig. 1 is a structure diagram of a detection system for acoustic transmission characteristics of building intercom system according to an embodiment of the present application;

Figs. 2A to 2E are schematic diagrams showing an overall loudness rating test of the detection system for acoustic transmission characteristics of building intercom system according to an embodiment of the present application;

Fig. 3 is a schematic diagram showing a sidetone masking rating test of the detection system for acoustic transmission characteristics of building intercom system according to an embodiment of the present application; and

Fig. 4 is a flow chart of a detection method for acoustic transmission characteristics of building intercom system according to an embodiment of the present application.

## DETAILED DESCRIPTION

The main concept of the present application is that during the detection, a P50 simulation voice of ITU-T or a P.501 human voice of ITU-T is an input voice signal during the detection, so that the acoustic performance of the transmitted voice during the detection is closer to the actual situations, so that the detection or test result of a building intercom system is more accurate. Further, an intercom equipment of the building intercom system capable of speech by using a hands-free manner is installed on a back board adaptive to the size of the intercom equipment; that is, the size of the back board is adjustable and changeable with the size of the intercom equipment, which can be flexibly adaptive to various sizes of equipment, so as to simulate the realest environment for detection, acquire a sound reflection result and realize a more accurate detection. Further, the performance of equipment, i.e., the quality of equipment, is determined more accurately and truly by improving an acoustic distortion test during the detection process so as to take the influence of the background noises of system equipment on the acoustic distortion into consideration.

To make the objects, technical solutions and advantages of the present application more clearly, the technical solutions of the present application will be clearly and completely described hereinafter with reference to the embodiments and corresponding drawings of the present application. Apparently, the embodiments described are merely parts of embodiments of the present application, rather than all embodiments. Other embodiments figured out by those skilled in the art on the basis of the embodiments of the present application without going through creative efforts shall all fall within the protection scope of the present application.

At first, part of technical terms which are possibly used in part of embodiments of the application are described briefly below.

<Building security intercom system>

The building security intercom system is an electronic system which is used for residences and commercial buildings and has functions of gating, intercom and video (if any) and the like and can achieve an unlocking function independently or by linkage with other systems.

<Analog building security intercom system>

The analog building security intercom system is a building security intercom system adopting analog signal for acoustic and video signal transmission.

<Visitor call point (VCU)>

The VCU is the equipment installed outside an entrance of a controlled building and it can send signals to or receive signals from one/more receiving equipments. The VCU has a selective call and call function and a bi-directional gating function.

Notes: the equipment in an independent system should have functions of direct unlocking or unlocking by linkage with other systems, image capture, etc.

<User receiver unit (URU)>

The URU is a piece of user equipment capable of setting addresses and it is a device which has functions such as bi-directional intercom and unlocking control.

<Security managing unit>

The security managing unit is the equipment which has functions such as selective call, two-way speech and lock control.

Notes: the call function and other functions of the equipment may be used by doorkeepers or security staff, and the equipment may also provide more optional functions, e.g., video monitoring and control, setting different passwords according to security permissions of people coming in and going out, programmable, provided with entrance and exit event logs, reducing or increasing user receiver units and system administrators and altering their permissions.

<Auxiliary device>

The auxiliary device is a device, such as a transmission equipment, a remote control equipment or a third party equipment, which is for auxiliary implementation of related extended functions of the simulated building security intercom system.

<Artificial mouth>

The artificial mouth is a simulation sound-producing device which conforms to the requirements of item 5 of international telecommunication union telecommunication standardization sector ITU-T P.51-1996, and the sound-producing characteristics of the device are similar to the directivity and radiation mode of the average human mouse.

<Artificial ear>

The artificial ear is a device which is used for calibrating a receiver and internally provided with an acoustic coupler and a microphone calibrated to be used for measuring the sound pressure. The overall acoustic impedance of the device is similar to the overall acoustic impedance of an average human ear within a given frequency band, and the characteristics of the device conform to the requirements of item 7 in ITU-TP.64-2007.

<Overall loudness rating (OLR) >

The overall loudness rating is used for measurement of overall loudness of a channel from the reference point of a transmitting-end mouth to the reference point of a receiving-end ear, and it is expressed with dB.

<Overall sensitivity>

The overall sensitivity is the gain of sound pressure of the reference point of a receiving-end ear relative to excitation sound pressure of the reference point of transmitting-end mouth, and it is expressed with dB and it is a function of frequency. The overall sensitivity can be used for evaluating frequency response.

<Acoustic distortion>

The acoustic distortion is a distortion of acoustic signals at the receiving end caused by system nonlinearity and background noise. The acoustic distortion is expressed with the percentage of the harmonic component of acoustic signals received by the receiving end and local noise relative to total sound pressure.

<Channel S/N>

The channel S/N is the sound pressure ratio of signals received by a receiving end to background noise under excitation of nominal sound pressure of a transmitting end, and it is expressed with dB.

<Sidetone masking rating (STMR)>

The STMR is the measurement of sidetone loudness after taking the masking effect of the human head on sidetone into consideration, and it is expressed with dB.

<Loudness rating guard-ring position (LRGP)>

The LRGP is the handle fixing position of the user receiver unit or the security managing unit for measuring the system loudness rating.

<Two-way speech>

The speech can be performed between the visitor call point and the user receiver unit. The speech technology may be duplex (synchronous) or simplex (non-synchronous).

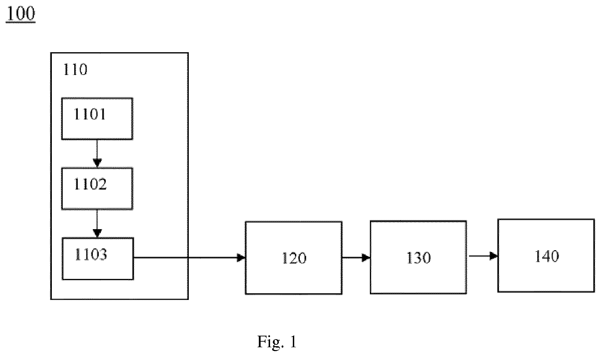

Fig. 1 is a structure diagram of a detection system for acoustic transmission characteristics of building intercom system according to an embodiment of the present application. In the embodiment, the acoustic transmission characteristics of an "analog building security intercom system" (i.e., bus-system building intercom system) are detected, so as to determine the performance and quality of the building intercom system according to the detected and calculated acoustic characteristic parameters, for example: five technical parameters including loudness rating, frequency response, distortion, signal to noise ratio and sidetone masking rating.

Based on the composition of the building intercom system involved in the present industrial standards GA/T678-2007 and GA/T72-2005, a building intercom system may include: such equipment as an equipment installed at an outdoor position like a building entrance (for example, a door unit), which is called as "visitor call point" in the following embodiment, an intercom equipment installed inside the house of each user (for example: an indoor unit), which is called as "user receiver unit" in the following embodiment, or the like. The building intercom system may further include an intercom equipment installed indoors for management, such as a "security managing unit" (referred to as "managing unit"), or the like. According to the detection method and the detection system of the present application, when an analog acoustic signal is transmitted in an analog building security intercom system, the actual application states of each basic composition equipment are simulated, evaluation criteria parameter information is detected and acquired, and the performance and quality of the building intercom system and the equipment thereof are determined, or the like.

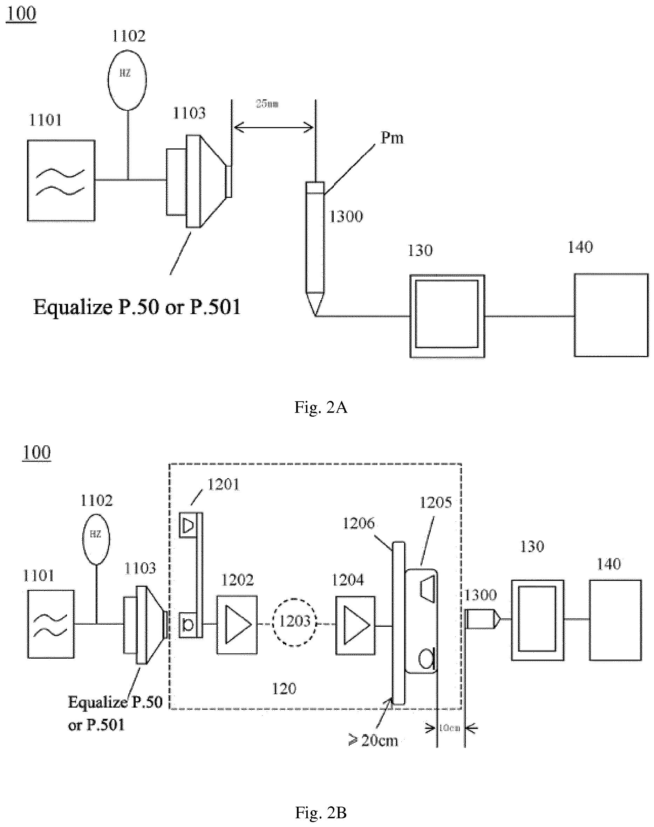

Fig. 1 shows an embodiment of a detection system 100 established according to the detection method of the present application. The detection system 100 may mainly include: a sound source portion 110, a detected pathway 120, a measuring device 130 and a calculating device 140. To be specific, please refer to Figs. 2A~2E, which show schematic diagrams of using the detection system 100 of the embodiment to detect.

The sound source portion 110 produces specific voice signals, wherein the specific voice signal includes the foregoing P.50 simulation voice signal or the P.501 human voice signal of the International Telecommunication Union-Telecommunication Standardization Sector ITU-T. In this way, a voice signal (sound signal/acoustic signal) inputted by a user by using the intercom equipment (telephone) of the building intercom system from the mouth can be simulated.

The sound source portion 110 may include an acoustic oscillator 1101, an artificial mouth 1103 connected with the acoustic oscillator 1101, or the like. The artificial mouth 1103 is associated with the detected pathway 120 so as to input the specific voice signal into the detected pathway 120 as an input voice signal. Further, the sound source portion 110 may include an equalizer (or a frequency meter) 1102 connected between the acoustic oscillator 1101 and the artificial mouth 1103, wherein the sound source portion 110 may emit a sound signal (acoustic signal) from the acoustic oscillator 1101; after the sound signal is subjected to frequency equalization (monitored or adjusted by the frequency meter) 1102, an equalized sound, that is the specific voice signal, which can be inputted to the input terminal of the detected pathway 120 by the artificial mouth 1103 is formed, wherein the sound serves as a test transmission voice for detecting the acoustic transmission characteristics of the building intercom system. That is, the specific voice signal produced by the sound source portion 110 may be inputted to the input terminal of the detected pathway 120 as the input voice signal through the sound source portion 110 (for example, the artificial mouth 1103), and transmitted in the detected pathway 120, and it can be outputted from the detected pathway 120 as a detected output voice signal.

The detected pathway 120 receives the input voice signal (specific voice signal) from the sound source portion 110, transmits the input voice signal and outputs the input voice signal as the detected output voice signal. The detected pathway 120 includes a speech pathway required to be detected which is arranged in the detected building intercom system.

To be specific, the detected pathway 120 includes a first telephone which is arranged at the input terminal of the detected pathway in the detected building intercom system, a communication link connected with the first telephone in the detected building intercom system and a second telephone in the detected building intercom system which is arranged at the output terminal of the detected assess 120 and connected to the communication link. Further, the specific voice signal from the sound source portion 110 is inputted into the detected pathway 120 as the input voice signal, transmitted in the detected pathway 120 and outputted as the detected output voice signal, which may be specifically as follows: the artificial mouth 1103 inputs the produced specific voice signal as the input voice signal through the first telephone, arranged at the input terminal, of the detected pathway 120, and the first telephone transmits the input voice signal to the communication link, and the communication link transmits the input voice signal to the second telephone, arranged at the output terminal, of the detected pathway 120, and the second telephone outputs the signal as the detected output voice signal, so as to form a speech from the first telephone to the second telephone of the detected building intercom system.

The first telephone and the second telephone may be intercom equipments in the building intercom system, for example: a visitor call point 1205, a user receiver unit/security managing unit 1207 or the like. The communication link may be a communication link of the detected building intercom system, which may include a first amplifier 1202 connected with the first telephone, an auxiliary device 1203 used for transmission and a second amplifier 1204 connected with the second telephone in sequence, wherein the auxiliary device 1203 is connected between the first amplifier 1202 and the second amplifier 1204. The first telephone and the second telephone in the detected pathway 120 are installed according to a usage mode during actual speech, wherein the first telephone receives the input voice signal (specific voice signal) inputted by the artificial mouth associated with the first telephone, and transmits the signal to the first amplifier 1202, the input voice signal is transmitted to the second telephone through the first amplifier 1202, the auxiliary device 1203 and the second amplifier 1204 in sequence, and it is outputted as the detected output voice signal by the second telephone, so as to form a speech from the first telephone to the second telephone in the detected building intercom system.

Further, during detection, if any one or two of the first telephone arranged at the input terminal of the detected pathway 120 and the second telephone arranged at the output terminal is capable of speech by using a hands-free manner, then such a first telephone and/or second telephone may be respectively installed on the central position of a back board in order to simulate the speech by using the hands-free manner and acquiring a more accurate detection result while each telephone capable of speech by using the hands-free manner is installed. That is, the back board is additionally installed in the detected pathway 120 for installing the telephone making the speech by using the hands-free manner. Moreover, the size of the back board and the size of the telephone installed in the central position thereof are mutually adapted, and the edge of the back board is kept a certain distance from the adjacent edge of the telephone installed in the central position thereof, for example, a distance is greater than or equal to 20cm. In this way, when the specific voice signal is transmitted to pass through the detected pathway 120, a voice signal reflection effect is produced through the back board on which the first telephone and/or the second telephone making the speech by using the hands-free manner is installed, so as to simulate the actual installation and usage states of the first telephone and/or the second telephone having a hands-free speech capability, which is closer to the voice transmission situation of the building intercom system in practical application, and it can affect the effect of a subsequent sound pressure measurement, so as to improve the accuracy of the detection result.

The measuring device 130 includes a microphone (also called as artificial ear) 1300, a measuring amplifier 1301 and a voltage measuring device 1302. The detected output voice signal outputted from the output terminal of the detected pathway 120 or from the second telephone is listened or received by the microphone 1300 which simulates (emulates) an adult ear, and it converts this type of sound signal into an electric signal, transmits the signal to the measuring amplifier 1301 for amplification, and then the signal is measured by the voltage measuring device 1302, so as to acquire a sound pressure represented by the voltage. Therefore, the measuring device 130 measures the sound pressure related to the detected output voice signal according to the detected output voice signal outputted by the detected pathway 120. The working principles of the microphone 1300 (preferably as: a standard half-inch sound pressure microphone), the measuring amplifier 1301 and the voltage measuring device 1302 (preferably as: a voltmeter, a spectrum analyzer and the like) may be based on existing sound pressure measurement principles, which will not be elaborated herein.

To be specific, the measuring device 130 may be connected with the sound source portion 110 through the microphone 1300 thereof, so as to adjust and measure the sound pressure Pm of an input reference point of the sound source portion 110 required according to the specific voice signal produced by the sound source portion 110; moreover, the measuring device 130 may also measure output sound pressures Po and Pe, or a total sound pressure P, and a sound pressure of fundamental wave $P_1$ related to the detected output voice signal according to the detected output voice signal; and/or it measures, based on the detected output voice signal, a sound pressure related to the detected output voice signal and a noise pressure within a frequency range of 200Hz~8000Hz related to the detected output voice signal, like the examples shown in Figs. 2A~2E as follows.

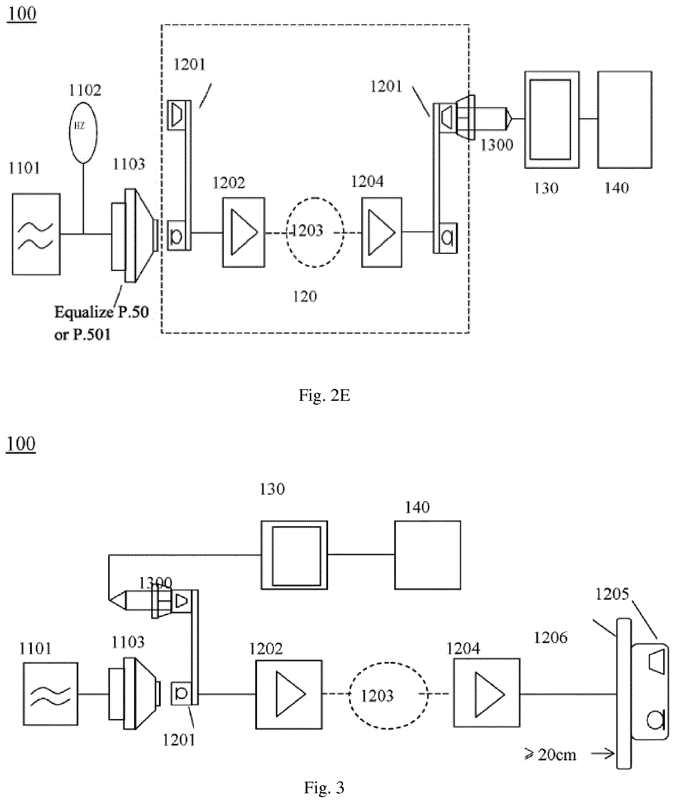

Moreover, during the detection, if the acoustic transmission characteristics need to be detected when the first telephone in the detected pathway 120 is simulated to be capable of speech by using a handle manner, the sidetone masking rating STMR of the first telephone making the speech by using the handle manner may be measured by the measuring device 130 based on the detected output voice signal (detected output voice signal transmitted to the microphone 1300) outputted by an earpiece of the handle according to the inputting of the specific voice signal as the input voice signal through the lip end of the handle and the transmitting in the detected pathway 120, like the example shown in Fig. 3.

The calculating device 140 calculates an acoustic characteristic parameter according to the sound pressure, related to the detected output voice signal, measured by the measuring device 130. The acoustic characteristic parameter includes overall loudness rating, frequency response, acoustic distortion, channel S/N, sidetone masking rating or the like. Calculation of the acoustic distortion is improved in order to determine the distortion caused by the nonlinearity of voice transmission and background noises, i.e., to acquire an acoustic distortion parameter in the acoustic characteristics more accurately, so as to judge the performance and quality of each equipment and link in the detected building intercom system more accurately. Firstly, the measuring device 130 may adjust the sound pressure Pm of the input reference point of the sound source portion 110 as OdBPa according to the specific voice signal produced by the sound source portion 110, and it drives the frequency of the specific voice signal to 510Hz or 1020Hz, thus measuring the total sound pressure P and sound pressure of fundamental wave $P_1$ related to the detected output voice signal based on the detected output voice signal outputted by the detected pathway 120. Then, the calculating device 140, based on the measured total sound pressure P and sound pressure of fundamental wave $P_1$ related to the detected output voice signal, calculates the acoustic distortion $\gamma$ through formula A.5

$$Y = \frac{P - P1}{P} \times 100\%$$

so as to determine distortion caused by the nonlinearity of voice transmission and background noises.

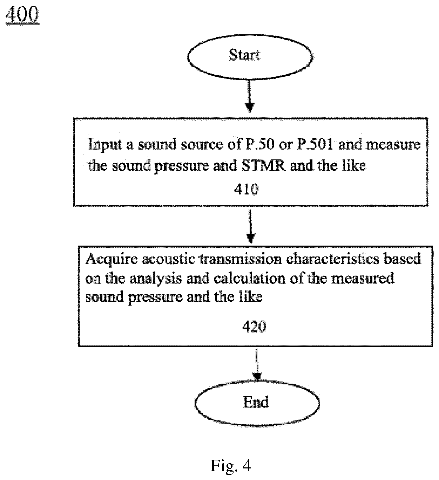

Examples for detecting a plurality of speech pathways of a building intercom system will be described hereinafter with reference to a flow chart of a detection method for acoustic transmission characteristics of building intercom system according to an embodiment of the present application, as shown in Fig. 4. The preferred conditions are as follows: keeping the ambient noise of a test site no more than 40dB(A), and after the speech is established among a security managing unit, a visitor call point and a user receiver unit, the test environments among the equipments shall not affect each other.

In step S410, a sound source portion 110 produces a specific voice signal, inputs the specific voice signal into a detected pathway 120 as an input voice signal, transmits the specific voice signal in the detected pathway 120 and outputs the specific voice signal as a detected output voice signal; therefore, a sound pressure related to the detected output voice signal may be measured based on the detected output voice signal.

A test signal used in the detection, i.e., a voice emitted by an artificial mouth and needed to be transmitted in the building intercom system is produced and transmitted (for example, inputted into the detected pathway 120) by the sound source portion 110. The specific voice signal includes a P.50 simulation voice signal or a P.501 human voice signal of the International Telecommunication Union-Telecommunication Standardization Sector ITU-T.

The P.50 simulation voice of ITU-T employed herein is a signal defined in mathematics, which can represent all the characteristics of human voices related (corresponding) to the characterization (character description) of a linear or non-linear telecommunication system. The simulation voice of P.50 should be used in the detection of the embodiment, which is produced more easily than a real human voice and has less variability than that of a real sound sample, so that a satisfying relationship may be provided between objective measurement and real-time voice test. The object of using the simulation voice of P.50 is to represent a real voice characteristic with a bandwidth of 100Hz-8kHz, so that it may be used for the measurement and tests on such equipments like a carbon microphone, an amplified telephone, a non-linear encoder, an echo control equipment, a syllable expander a non-linear system or the like, and it presents sufficient measurement characters in the persistent movement (i.e., not stopping) of a single-channel signal, which can evaluate voice signal processing system and equipment more objectively.

Further, the P.50 signal in the embodiment has a characteristic that the frequency spectrum thereof is closer to a human voice characteristic, for instance: reasonable and rich vowel and consonant distribution over time, and different from noise. Therefore, the P.50 signal of ITU-T has essential distinction from a frequency sweep signal in time domain. Using the P.50 signal of ITU-T as a sound source provided by the sound source portion 110 to the detected pathway 120 is more suitable for testing the equipment (product) of a building intercom system by using such voice processing algorithm (such as noise suppression, AGC automatic gain control/echo cancellation, or the like) as coding and decoding; moreover, the human voice can be transmitted more effectively, and it is closer to the actual usage state of the equipment during the detection process, so that the detected result is more accurate and even in more precision.

Moreover, a similar sound source may also employ the human voice signal in P.501. It may be noted in the test report that which of the two human voice signals of P.50 or P.501 is employed as the test signal (sound source).

In this way, the change of the sound source employed during the detection is closer to the practical application situation, and the sound pressure acquired by measurement is more accurate, so that the detection result will be more accurate. For example, based on the frequency of a specific sound source, i.e., a drive sound source signal (voice), the sound pressure Pm of the reference point is adjusted and measured, and the sound pressures Po, Pe, P and $P_1$ and noise pressure related to the detected output voice signal are measured. Moreover, the sidetone masking rating STMR of the telephone at the input terminal capable of speech by using a handle manner is measured through the transmission (transmission under the detected speech connection state of the building intercom system) of the specific voice signal produced by the specific sound source during the detection process. Because the practical application state of the building intercom system is emulated more realistically, these measured values are more accurate and in more precision.

Examples for detecting the acoustic transmission characteristics of each speech channel established for the building intercom system will be described hereinafter by using the detection method of the present application. The artificial voice of P.50 or human voice signal of P.501 is used as a sound source.

Figs. 2A to 2E are schematic diagrams showing an overall loudness rating test of the detection system for acoustic transmission characteristics of building intercom system according to an embodiment of the present application.

As shown in Fig. 2A, the sound pressure Pm of a mouth reference point is measured.

A standard half-inch sound pressure microphone 1300 in a detected pathway 120 may be placed straight ahead of the lip ring of an artificial mouth 1103 in a sound source portion 110 by 25mm along a 90-degree incident direction. The sound pressure Pm of the mouth reference point is adjusted to -4.7dBPa (89.3 dB SPL), and the sound pressure (loudness) of an output voice signal is adjusted, then the sound pressure Pm at each frequency point is measured according to the frequency interval of 1/3 octave, so that the fluctuation of the sound pressure does not exceed +/-ldB (using 1000Hz as a reference point) within a range of 200Hz~4000Hz. When the bandwidth is expanded to 8000Hz, then the fluctuation is required to not exceed +/-2dB within an expanded frequency range of 100Hz~8000Hz. The frequency of an excitation signal employed herein is 100Hz~10000Hz; through adjusting, the sound pressure Pm of the mouth reference point acquired by a measuring device 130 may be used as a reference for subsequent measurement, analysis and calculation, i.e., adjusting the sound pressure of the artificial mouth 1103 to reach Pm so as to prepare for subsequent detection.

As shown in Fig. 2B, when the security managing unit or the user receiver unit making the speech by using a handle manner is measured, the output sound pressure of the visitor call point is Po. The security managing unit or the user receiver unit 1207 herein is a first telephone, and the visitor call point 1205 is a second telephone.

The artificial mouth 1103 is close to the voice input terminal (mouth end) of a handle 1201 used in the managing unit or the user receiver unit at the input terminal of the detected pathway 120 to keep a sound source (a drive sound source of the artificial mouth 1103) unchanged; that is, the sound source used in the foregoing Fig. 2A, for example, voice signals of P.50 and P.501 (sound signal/acoustic signal) are inputted from the handle 1201, passing through a first amplifier 1202, an auxiliary device 1203, a second amplifier 1204 and the visitor call point 1205 connected in the detected pathway 120, and they are outputted by the visitor call point 1205 and transmitted to the microphone 1300, and then the microphone 300 converts the sound signal into an electric signal and transmits the signal to the measuring amplifier of the measuring device 130 and then to a voltage measuring device, so as to measure the acquired voltage. The measured voltage represents the sound pressure, i.e., representing that the sound pressure detection result Po related to the voice signal, which is outputted and required to be detected, is acquired via measurement.

The handle 1201 is fixed on a head frame according to the loudness rating guard-ring position LRGP defined according to Suggestion P.64 of ITU-T. The visitor call point 1205 is vertically fixed according to an installation position during normal usage, the standard half-inch sound pressure microphone 1300 is arranged in front of the center of housing surface of the visitor call point 1205 by 10cm; and similarly, the output sound pressure Po of each frequency point within the range of 200Hz~4000Hz at one end of the visitor call point 1205 under a hands-free manner is measured according to the frequency interval of 1/3 octave.

Preferably, when the visitor call point 1205 is capable of speech in a hands-free manner, then the visitor call point can be vertically fixed on a back board/baffle (center position) according to the installation position during normal usage, which is as shown by a back board 1206. Then the second amplifier 1204 is connected with the back board 1206 to transmit voices to one end of the visitor call point 1205 through the back board. The size of the back board 1206 is changeable so as to adapt to the actual size of the visitor call point 1205 (i.e., intercom equipment and a telephone) which makes the speech by using a hands-free mode and is installed on the back board, for instance: adjusting or replacing a back board with the corresponding size, or the like. Moreover, the edge of the back board is kept a certain distance from the adjacent edge of the telephone making the speech in a hands-free mode and installed in the central position of the back board. Preferably, the visitor call point 1205 is fixed at the central position of a seamless hardwood board, and the distance between each edge of the visitor call point 1205 and the adjacent edge of the corresponding wood board is not less than 20cm. Because the distance between each edge of the back board 1206 and each adjacent edge of the housing of the telephone is kept to be greater than or equal to 20cm, the uniformity of sound reflection and the uniformity and effectiveness of testing are ensured as much as possible.

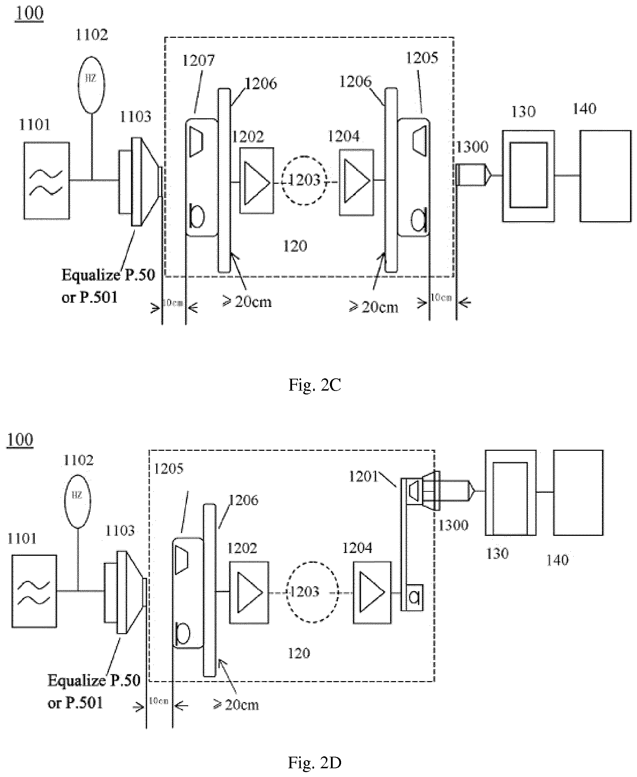

In traditional actual building intercom systems, the telephone receivers and microphones of most intercom equipments (telephones) are installed on the front panel of the housing; although a test can be conducted, losses are caused to a low frequency component of a frequency spectrum, compared with an actual situation that is installed on a wall surface, which causes a larger difference to the actual usage situation. While loud speakers and pickups of the intercom equipments in more and more building intercom systems at present are installed on a lateral surface or back surface for the consideration of product beauty and structural design. However, during actual installation and use, such products like the intercom equipments making the speech by using a hands-free manner will be installed on the wall surface which has a reflection effect to the sound signal (sound signal), and the wall will effectively reflect and refract back sound waves emitted by the loud speakers of the intercom equipments from the back surface or lateral surface towards the wall surface, converging the sound waves to the listening direction of a user (for example, the microphone/artificial ear in Fig. 2 can effectively receive the sound signal). During past detections, the back board is not additionally installed on the intercom equipment making the speech by using a hands-free mode, then a number of low frequency components of acoustics without a baffle will be lost, and the testing result is greatly different from the actual using effect. Meanwhile, for a product of which the pickup is installed on the lateral surface or lower side of the intercom equipment, when a user is capable of speech by using a hands-free manner (when the artificial mouth emits a test sound in Fig 1 and Fig 2), the test signal cannot be directly and effectively received, and the sound volume in accordance with the actual usage state can only be received through the reflection of the wall surface. Therefore, the detection result can be acquired more accurately by additionally installing a proper back board, simulating the actual installation and usage states of the intercom equipment, and using the reflection effect of the sound signal. Moreover, because the sizes of different intercom equipments are different, the simulated wall body reflection effect can be further ensured for the back board adapting to the size of the intercom equipment by itself, i.e., the back board is adjustable; therefore, the detection accuracy is ensured.

As shown in Fig. 2C, when the security managing unit or the user receiver unit making the speech by using a hands-free manner is measured, the output sound pressure of the visitor call point is Po. The security managing unit or the user receiver unit 1207 herein is a first telephone, and the visitor call point 1205 is a second telephone.

The artificial mouth 1103 is close to the managing unit or the user receiver unit 1207 in the detected pathway 120, for instance, the lip ring of the artificial mouth 1103 is kept 10cm from the center of the housing surface of the user receiver unit 1207 to keep a sound source (a drive sound source of the artificial mouth 1103) unchanged to perform the voice input; that is, the sound source used in the foregoing Fig. 2A, for example, voice signals of P.50 and P.501 (sound signal/acoustic signal) are inputted from the hands-free, such as the microphone/transmitter or the like, of the user receiver unit (managing unit) 1207, passing through a first amplifier 1202, an auxiliary device 1203, a second amplifier 1204 and the visitor call point 1205 connected in the detected pathway 120, and they are outputted by the visitor call point 1205 and transmitted to the microphone 1300, herein the microphone 1300 has a distance of 10cm from the center of housing surface of the visitor call point 1205. The microphone 300 converts the sound signal into an electric signal and transmits the signal to the measuring device 130. Therefore, the measuring device measures the sound pressure detection result Po related to the voice signal based on the voice signal which is outputted and is required to be detected.

Both the visitor call point (managing unit) 1207 and the visitor call point 1205 making the speech by using a hands-free manner are vertically fixed according to an installation position during normal usage, and the standard half-inch sound pressure microphone 1300 is arranged in front of the center of a housing surface of the visitor call point 1205 by 10cm; and similarly, the output sound pressure Po of each frequency point within the range of 200Hz~4000Hz at one end of the visitor call point 1205 under a hands-free manner is measured according to the frequency interval of 1/3 octave.

Preferably, the user receiver unit (managing unit) 1207 and the visitor call point 1205 making the speech by using a hands-free manner can be vertically fixed on a back board which can adapt to the actual size of the user receiver unit (managing unit) 1207 or the visitor call point 1205 according to the installation position during normal usage, which is as shown by a back board 1206. Then the first amplifier 1202 is connected with the back board 1206 used for fixing the user receiver unit (managing unit) 1207, and it receives the voices transmitted by the artificial mouth 1103 through the user receiver unit (managing unit) 1207. While the second amplifier 1204 is connected with the back board 1206 for fixing the visitor call point 1205 to transmit the voices to one end of the visitor call point 1205 through the back board 1206. Please refer to the descriptions about the measurement of Po in Fig. 2B for the structures, principles and characteristics of each back board 1206, which will not be elaborated herein.

Based on the Po measured according to Fig. 2B and 2C, the overall loudness rating of the visitor call point 1205 may be detected.

As shown in Fig. 2D, when the visitor call point is connected, the security managing unit or the user receiver unit is capable of speech by using a handle manner, and the earpiece output sound pressure Pe of the voice output terminal or earpiece (artificial ear) of the handle is measured. The visitor call point 1205 here is a first telephone, and the security managing unit or user receiver unit 1207 is a second telephone.

The artificial mouth 1103 is close to the managing unit 1205 in the detected pathway 120, for instance, the lip ring of the artificial mouth 1103 is kept 10cm from the center of the housing surface of the visitor call point 1205 to keep a drive sound source of the artificial mouth 1103 unchanged to perform the voice input; that is, the sound source used in the foregoing Fig. 2A. For example, voice signals of P.50 and P.501 (sound signal/acoustic signal) is inputted from the input (input of microphone/transmiter or the like) of the visitor call point 1205, passing through a first amplifier 1202, an auxiliary device 1203, a second amplifier 1204 and the earpiece of the handle 1201 used by the user receiver unit (managing unit) 1207 and they are transmitted to the microphone 1300, and then the microphone 300 converts the sound signal into an electric signal and transmits the signal to the measuring device 130, and thus the measuring device measures the sound pressure detection result, i.e. the output sound pressure detection result Pe of the earpiece of the handle 1201, related to the voice signal based on the voice signal which is outputted and is required to be detected.

The visitor call point 1205 in a hands-free manner is vertically fixed according to the installation position during normal use, and the handle 1201 used by the security managing unit or user receiver unit 1207 is fixed on the head frame according to LRGP, and the earpiece of the handle 1201 is closely coupled with the microphone (i.e., the artificial ear) 1300. The output sound pressure Pe of the earpiece of each frequency point within the range of 200Hz~4000Hz is measured according to the frequency interval of 1/3 octave.

Preferably, the visitor call point 1205 can be vertically fixed on a back board which adapts to the actual size of the visitor call point 1205, according to the installation position during normal use, which is as shown by a back board 1206. Then the first amplifier 1202 is connected to the back board 1206 for fixing the visitor call point 1205, and receives the voices of the artificial mouth 1103 transmitted through the visitor call point 1205. Please refer to the descriptions about the measurement of Po in Figs. 2B and 2C for the structures and characteristics of the back board 1206 which will not be elaborated herein.

As shown in Fig. 2E, when the security managing unit making the speech by using a handle manner is connected with the user receiver unit making the speech by using a handle manner, the output sound pressure Pe of the earpiece of the handle of the security managing unit is measured, or the output sound pressure Pe of the earpiece of the handle of the user receiver unit is measured. The security managing unit here is a first telephone, then the user receiver unit is a second telephone; and when the user receiver unit is the first telephone, then the security managing unit is the second telephone.

The artificial mouth 1103 is close to the voice input terminal (mouth end) of the handle 1201 used in the user receiver unit or the managing unit 1207 in the detected pathway 120 to keep a drive sound source of the artificial mouth 1103 unchanged; that is, the sound source used in the foregoing Fig. 2A, for example, voice signals of P.50 and P.501 (sound signal/acoustic signal) is inputted from the mouth end of the handle. It passes through a first amplifier 1202, an auxiliary device 1203, a second amplifier 1204 and the earpiece of the handle 1201 used by the managing unit or user receiver unit 1207 and it is transmitted to the microphone 1300, and then the microphone 300 converts the sound signal into an electric signal and transmits the signal to the measuring device 130, so that the measuring device measures the sound pressure detection result, i.e., the output sound pressure detection result Pe of the earpiece of the handle 1201, related to the voice signal based on the voice signal which is outputted and is required to be detected.

The handle 1201 used by the user receiver unit and security managing unit 1207 is fixed on the head frame according to LRGP, and the earpiece of the handle 1201 is closely coupled with the artificial ear. The output sound pressure Pe of the earpiece of each frequency point within the range of 200Hz~4000Hz is measured according to the frequency interval of 1/3 octave.

If the positions of the handle used by the managing unit and the handle used by the user receiver unit are exchanged, then the output sound pressures Pe of the earpieces of the handles used by different telephones can be measured.

Referring to the manner in Fig. 2B, the output sound pressure Po of the user receiver unit capable of speech by using a hands-free manner can also be measured when the security managing unit is connected with the user receiver unit capable of speech by using the hands-free manner. By replacing the visitor call point 1205 in Fig. 2B into the user receiver unit 1207 in the hands-free manner, at this moment, the handle 1201 used by the managing unit is fixed as the input terminal. All the intercom equipments (telephones) capable of speech by using a hands-free manner can use the back board 1206.

Similarly, referring to the manner in Fig. 2B, the output sound pressure Po of security managing unit capable of speech by using a hands-free manner can also be measured when the user receiver unit is connected with the security managing unit capable of speech by using the hands-free manner. By replacing the visitor call point 1205 in Fig. 2B into the managing unit 1207 in the hands-free manner, at this moment, the handle 1201 used by the user receiver unit is fixed as the input terminal. All the intercom equipments (telephones) capable of speech by using a hands-free manner can use the back board 1206.

Similarly, referring to the manner in Fig. 2C, the output sound pressure Po of the security managing unit or the user receiver unit can also be measured when the visitor call point is connected and the security managing unit or the user receiver unit capable of speech by using the hands-free manner, by exchanging the position of the user receiver unit (managing unit) 1207 in Fig. 2C and the position of the visitor call point 1205 in Fig. 2C. The intercom equipments (telephones) capable of speech by using a hands-free manner can use the back board 1206.

Similarly, referring to the manner in Fig. 2C, the output sound pressure Po of the security managing unit or the user receiver unit can also be measured when the security managing unit is connected with the user receiver unit and both of the two are capable of speech by using the hands-free manner, by replacing the visitor call point 1205 in Fig. 2C into the user receiver unit 1207 or the managing unit 1207, and corresponding the position of the corresponding output terminal to the managing unit 1207 or user receiver unit 1207. The intercom equipments (telephones) capable of speech by using a hands-free manner can use the back board 1206.

Referring to the manner in Fig. 2D, the output sound pressure Pe of the earpiece of the handle used by the security managing unit can also be measured when the security managing unit is connected with the user receiver unit capable of speech by using the hands-free manner, by replacing the position of the visitor call point 1205 in Fig. 2D into the user receiver unit 1207 capable of speech by using a hands-free manner, the output terminal fixed with the handle 1201 used by the security managing unit. The intercom equipments (telephones) capable of speech by using a hands-free manner can use the back board 1206.

Similarly, referring to the manner in Fig. 2D, the output sound pressure Pe of the earpiece of the handle used by the user receiver unit can also be measured when the user receiver unit is connected with the security managing unit capable of speech by using the hands-free manner, by replacing the position of the visitor call point 1205 in Fig. 2D into the managing unit 1207 capable of speech by using a hands-free manner, the output terminal fixed with the handle 1201 used by the security managing unit. The intercom equipments (telephones) capable of speech by using a hands-free manner can use the back board 1206.

Based on the measured Pe according to Fig. 2D and 2E and with reference to the detected Po according to Fig. 2B and 2C, the overall loudness rating at the security managing unit and the user receiver unit is detected.

In the embodiment, the building intercom system is measured according to Figs. 2B to 2E. Because the P.50 or P.501 is used as the sound source during the process of detecting the acoustic transmission characteristics, and the self-adaptive back board with adjustable size is added so as to form the emulation of the voice reflection effect of the intercom equipment (telephone) capable of speech in a hands-free manner, or the like, both the accuracy and precision of the detected Po and Pe are improved. Further, more accurate and more exact overall loudness rating can be acquired on the basis of more exact and more accurate Po and Pe and according to the existing calculation formula (see the measurement and analysis operation on the acoustic transmission characteristics in 7.4 of the industrial standard GA/T72-2005).

Further, the embodiment may also measure the sidetone masking rating of the security managing unit and user receiver unit. Fig. 3 is a schematic diagram showing a sidetone masking rating test of the detection system for acoustic transmission characteristics of building intercom system, according to an embodiment of the present application. The artificial mouth 1103 of the sound source portion 110 is close to the voice input terminal of the handle 1201 used in the user receiver unit or the managing unit 1207 in the detected pathway 120 to keep a drive sound source of the artificial mouth 1103 unchanged to perform the voice input; that is, the sound source used in the foregoing Fig. 2A, for example, voice signals of P.50 and P.501 (sound signal/acoustic signal) is inputted from the voice input terminal of the handle 1201. The voice signal passes through the first amplifier 1202, the auxiliary device 1203 and the second amplifier 1204 connected in the detected pathway 120, and it is transmitted to the visitor call point 1205. Moreover, crosstalk of the mouth end and the earpiece of the handle 1201 may be caused due to the defects of the intercom equipment or the talk defects of the building intercom system; then a part of the voice signal may possibly be transmitted to the earpiece of the handle 1201, and then it is transmitted to the measuring device 130 by the microphone 1300. In this way, the sidetone masking rating STMR of the user receiver unit (managing unit) 1207 can be measured after establishing a speech between the user receiver unit (managing unit) 1207 with the handle 1201 and the visitor call point 1205, and the crosstalk of the system equipment is judged in this way. The foregoing back board 1206 may also be employed by the visitor call point 1205 capable of speech in a hands-free manner. The handle 1201 used by the user receiver unit or security managing unit 1207 is fixed on the head frame according to LRGP, and the earpiece of the handle 1201 is closely coupled with the microphone 1300.

In step S420, an acoustic characteristic parameter is calculated according to the measured sound pressure related to the detected output voice signal, so as to determine the acoustic transmission characteristics of the detected pathway.

For example:

> (1) calculation of the overall loudness rating of the visitor call point and the user receiver unit (managing unit) capable of speech by using a hands-free manner:

> > (i) calculating the overall sensitivity/frequency characteristics Sro (formula A.1) of the visitor call point and the user receiver unit capable of speech by using a hands-free manner:

$$s_{ro} = 20 \lg\left(P_o \big/ P_m\right) dB \quad \text{(Relative to 1Pa/Pa)} \quad \dots\dots\dots\dots\dots\dots\dots\dots\dots (A.1)$$

(ii) calculating the overall loudness rating OLR (formula A.2) of the visitor call point and the user receiver unit capable of speech by using a hands-free manner:

$$OLR = -\frac{10}{m} \times \lg \sum_{i=4}^{17} 10^{\frac{m}{10}(S_{ro} - W_{oi})} \quad \dots\dots\dots\dots\dots\dots\dots\dots\dots (A.2)$$

Woi--weighting coefficient for calculating the OLR, wherein Wo of different frequencies is shown in Table A.1;

m--slope parameter, wherein m=0.175.

(2) calculation of the overall loudness rating of the security managing unit and the user receiver unit capable of speech by using a handle manner:

(i) calculating the overall sensitivity/frequency characteristics Sor (formula A.3) of the security managing unit and the user receiver unit capable of speech by using a handle manner:

$$S_{or} = 20 \lg\left(P_e \big/ P_m\right) dB \quad \text{(Relative to 1Pa/Pa)} \quad \dots\dots\dots\dots\dots\dots\dots\dots\dots (A.3)$$

(ii) calculating the overall loudness rating OLR (formula A.4) of the security managing unit and the user receiver unit capable of speech by using a handle manner:

$$OLR = -\frac{10}{m} \times \lg \sum_{i=4}^{17} 10^{\frac{m}{10}(S_{or} - W_{oi} - L_{Ei})} \quad \dots\dots\dots\dots\dots\dots\dots\dots\dots (A.4)$$

$L_{Ei}$-sound leakage coefficient of earpiece, and $L_E$ of different frequencies is shown in Table A.1;

m-- slope parameter, wherein m=0.175.

GA/T72-2005 Coefficient Table A.1

| Frequency band No./I | Center frequency/Hz | Overall Weighting Coefficient $W_o$ | Sound leakage coefficient of earpiece $L_E$ |
|---|---|---|---|
| 4 | 200 | 66.1 | 8.4 |
| 5 | 250 | 60.7 | 4.9 |
| 6 | 315 | 68.5 | 1.0 |
| 7 | 400 | 55.6 | -0.7 |
| 8 | 500 | 66.9 | -2.2 |
| 9 | 630 | 63.3 | -2.6 |

(continued)

| Frequency band No./I | Center frequency/Hz | Overall Weighting Coefficient $W_o$ | Sound leakage coefficient of earpiece $L_E$ |
|---|---|---|---|
| 10 | 800 | 63.4 | -3.2 |
| 11 | 1000 | 65.3 | -2.3 |
| 12 | 1250 | 73.1 | -1.2 |
| 13 | 1600 | 70.1 | -0.1 |
| 14 | 2000 | 82.0 | 3.6 |
| 15 | 2500 | 78.6 | 7.4 |
| 16 | 3150 | 95.4 | 6.7 |
| 17 | 4000 | 76.9 | 8.9 |

When the test results calculated according to detection comply with the requirements of the overall loudness rating of the acoustic characteristics, then it may present that the performances of the detected building intercom system and the equipments thereof comply with the specifications.

For example:
The overall sensitivity/frequency characteristics Sro (formula A.1) of the visitor call point are calculated according to the Po and Pe measured in the embodiment. The sound pressure fluctuation of Po relative to Pm is recorded by taking 1000Hz as a reference point. If the frequency response requirements of the acoustic characteristics are satisfied within the range of 500Hz~3400Hz, then it can present that the performances of the detected building intercom system and the equipments thereof comply with the specifications. And, the overall sensitivity/ frequency characteristics Sro (formula A.1) and Sor (formula A.3) of the security managing unit and user receiver unit are calculated according to the Po and Pe measured in the embodiment. The sound pressure fluctuation of Po and Pe relative to Pm is recorded by taking 1000Hz as a reference point. If the frequency response requirements of the acoustic characteristics are satisfied within the range of 500Hz~3400Hz, then it can present that the performances of the detected building intercom system and the equipments thereof comply with the specifications.

In a preferred manner of the embodiment, the acoustic distortion may be measured and calculated according to the measurements of the embodiment as shown in Figs. 2A to 2E, wherein the sound pressure Pm of the reference point of the artificial mouth 1103 is adjusted to be OdBPa, and the frequencies for driving the sound source signal (specific sound source, input voice) are 510Hz and 1020Hz. In this way, the total sound pressure P and the sound pressure of fundamental wave $P_1$ related to the detected output voice signal are measured by using the measuring device 130. The frequency band for calculation is determined to be 200Hz~8000Hz. The calculating device 140 analyzes the measured data, and employs an improved calculation method (formula A.5), which may calculate the acoustic distortion $\gamma$ as:

$$\gamma = \frac{P - P1}{P} \times 100\% \quad \ldots\ldots\ldots\ldots\ldots\ldots\ldots\ldots\ldots \quad (A.5)$$

Acoustic distortion refers to the distortion of sound signals at a receiving end caused by the non-linear system and background noises. The acoustic distortion is represented by the percentage of the harmonic component of the sound signal received by the receiving end and the local noises relative to the total sound pressure. The measurement and calculation employing the acoustic distortion take the influences on the sound transmission due to the distortion caused by the background noises of the detected building intercom system and the equipments thereof, which can completely reflect the actual distortion situations of the detected building intercom system and the equipments thereof and improve the detection (measurement) accuracy of the performance and quality of the equipment relative to the measurement and calculation of the existing nonlinear distortion.

In a preferred manner of the embodiment, the channel S/N may be measured according to the measurements of the embodiment as shown in Figs. 2A to 2E, wherein the sound pressure Pm of the reference point of the artificial mouth 1103 is adjusted to be OdBPa, and the frequency for driving the sound source signal (specific sound source, input voice) is 1020Hz. In this way, the measuring device 130 is used to measure the sound pressure related to the detected output voice signal, and the noise pressure of the detected output voice signal in the frequency range of 200Hz~8000Hz. In the calculating device 140, measurement analysis, calculation and comparison are conducted; moreover, the decibel difference between the signal sound pressure and the noise sound pressure is measured, and the channel S/N is determined due to the voice signal outputted by the output terminal of the detected pathway 120 during the detection. If the channel S/N requirements of the acoustic characteristics are satisfied, then it can represent that the performances of the detected building intercom system and the equipments thereof comply with the specifications.

Further, the sidetone masking rating measured in the embodiment may also be calculated according to the manner specified in item 7 of the existing ITU-TP.79-2007. If the sidetone masking rating requirements of the acoustic characteristics are satisfied, then it can represent that the performances of the detected building intercom system and the equipments thereof comply with the specifications.

According to the detection method of the present application, sound signals for detection, more complying with the actual human voice, are simulated by changing the sound source used for detection during the detection process; the reflection and refraction effects of the sound signals in practical application are simulated by additionally setting the back board with adaptive size (changeable) in the detection operation; and the actual distortion situation is reflected thoroughly by measuring and calculating the acoustic distortion; therefore, the defect of acquiring error and inaccurate detection result in the prior art without accurate measurement is solved, and the detection accuracy and precision of simulating the acoustic transmission characteristics of the building intercom system are increased, and the accuracy of detecting/checking and judging the performance/quality of the detected product is further improved.

The detection method and the detecting system of the present application will also be applied to the preparation of four series of standards and national standards in the Project of International Standard IEC62820 Technical Requirements of Building Intercom System, which is published and implemented in the whole world as a test method for simulating the acoustic transmission characteristics of transmission products (bus-system).

It should be illustrated that the terms "include", "comprise" or any variation thereof herein refer to "include but not limited to". Therefore, for a process, method, commodity or equipment that includes a series of elements, the process, method, commodity or equipment not only includes such elements, but also includes other elements not specified expressly, or may include inherent elements of the process, method, commodity or equipment. Unless otherwise specified, in the context of "include a ...", the process, method, commodity or equipment that includes or comprises the specified elements may also include other identical elements.

The above descriptions are merely embodiments of the present application, but are not intended to limit the present application. Other alterations and changes of the present application will be apparent to those skilled in the art. Any modification, equivalent replacement, improvement and the like, made within the principle of the present application, shall all fall within the scope of the claims of the present application.

## Claims

1. A detection system (100) for acoustic transmission characteristics of building intercom system, at least comprising a sound source portion (110), a detected pathway (120), a measuring device (130) and a calculating device (140), **characterized in that**, the sound source portion adapted to produce a specific voice signal, wherein the specific voice signal comprises a P.50 simulation voice signal or a P.501 human voice signal of International Telecommunication Union-Telecommunication Standardization Sector ITU-T;

   the detected pathway comprises a first telephone, a second telephone and a communication link connected with the first telephone and the second telephone in a detected building intercom system; wherein, the first telephone and the second telephone is respectively located at an input terminal of the detected pathway and at an output terminal of the detected pathway, the detected pathway is associated with the sound source portion, for inputting the specific voice signal into the detected pathway as an input voice signal, transmitting the specific voice signal in the detected pathway, and outputting the specific voice signal as a detected output voice signal; and

   the measuring device adapted to measure a sound pressure related to the detected output voice signal based on the detected output voice signal; and

   the calculating device adapted to calculate an acoustic characteristic parameter according to the measured sound pressure related to the detected output voice signal to determine acoustic transmission characteristics of the detected pathway;

   wherein the measuring device is connected to the sound source portion through a microphone, so as to adjust and measure a sound pressure $Pm$ of an input reference point of the sound source portion according to the specific voice signal produced by the sound source portion; and

   the measuring device measures output sound pressures $Po$ and $Pe$, or a total sound pressure $P$ and a sound pressure of fundamental wave $P_1$ related to the detected output voice signal based on the detected output voice signal; and/or the measuring device measures a sound pressure related to the detected output voice signal and a noise pressure within a frequency range of 200Hz~8000Hz related to the detected output voice signal based on the detected output voice signal.

2.  The detection system for acoustic transmission characteristics of building intercom system according to any one of claim 1, **characterized in that**, the acoustic characteristic parameter comprises: overall loudness rating, frequency response, acoustic distortion, channel S/N and sidetone masking rating.

3.  The detection system for acoustic transmission characteristics of building intercom system according to any one of claims 1 to 2, **characterized in that**,
    the measuring device adjusts the sound pressure Pm of an input reference point of the sound source portion as 0dBPa according to the specific voice signal produced by the sound source portion, and drives the frequency of the specific voice signal to 510Hz, 800Hz or 1020Hz, thus measuring the total sound pressure P and sound pressure of fundamental wave $P_1$ related to the detected output voice signal based on the detected output voice signal outputted by the detected pathway; and
    the calculating device, based on the measured total sound pressure P and sound pressure of fundamental wave $P_1$ related to the detected output voice signal, calculates the acoustic distortion $\gamma$ as:

    $$\gamma = \frac{P - P1}{P} \times 100\% ,$$

    so as to determine a distortion caused by the nonlinearity of voice transmission and the background noises.

4.  The detection system for acoustic transmission characteristics of building intercom system according to any one of claims 1 to 3, **characterized in that**,
    the sound source portion comprises: an acoustic oscillator and an artificial mouth connected with the acoustic oscillator, wherein the artificial mouth is associated with the first telephone of the detected pathway, and the specific voice signal is inputted as the input voice signal from the first telephone via the artificial mouth;
    the communication link comprises: a first amplifier connected with the first telephone in the detected building intercom system, an auxiliary device connected with the first amplifier for transmission, and a second amplifier connected with the auxiliary device; and
    the detected pathway comprises: the first telephone and the second telephone installed according to a usage mode during actual speech, the first telephone receiving the input voice signal inputted by the artificial mouth and transmitting the signal to the first amplifier, the input voice signal transmitted to the second telephone through the first amplifier, the auxiliary device and the second amplifier in sequence, and outputted as the detected output voice signal by the second telephone, so as to form a speech from the first telephone to the second telephone in the detected building intercom system.

5.  The detection system for acoustic transmission characteristics of building intercom system according to any one of claims 1 to 4, wherein the detected pathway comprises:

    when any one or two of the first telephone and second telephone are simulated to be capable of speech by using a hands-free manner, the first telephone and/or the second telephone making the speech by using the hands-free manner being respectively installed in a central position of a back board; and
    the size of the back board and the size of the first telephone and/or the second telephone, installed in the central position of the back board, making the speech by using the hands-free manner are mutually adapted, so that edges of the back board are kept a certain distance, preferably a distance greater than or equal to 20cm from adjacent edges of the first telephone and/or the second telephone, installed in the central position of the back board, making the speech by using the hands-free manner.

6.  The detection system for acoustic transmission characteristics of building intercom system according to claim 5, **characterized in that**, when the specific voice signal is transmitted to pass through the detected pathway, a voice signal reflection effect is produced through the back board on which the first telephone and/or the second telephone capable of speech by using the hands-free manner is installed, so as to simulate actual installation and usage states of the first telephone and/or the second telephone having a hands-free speech capability.

7.  The detection system for acoustic transmission characteristics of building intercom system according to any one of claims 1 to 6, **characterized in that**,
when the first telephone in the detected pathway is simulated to be capable of speech by using a handle manner, the sidetone masking rating STMR of the first telephone making the speech by using the handle manner is measured by the measuring device based on a detected output voice signal outputted by an earpiece of the handle according to the inputting of the specific voice signal as the input voice signal through a lip end of the handle and the transmitting in the detected pathway.

8. (Original) A detection method for acoustic transmission characteristics of building intercom system, **characterized by** comprising:

> a sound source portion producing, by a sound source portion (110), by a first telephone of a detected building intercom system in a detected pathway (120), a specific voice signal, inputting the specific voice signal into the detected pathway as an input voice signal, transmitting the specific voice signal in the detected pathway, and outputting the specific voice signal as a detected output voice signal; wherein, the specific voice signal comprises a P.50 simulation voice signal or a P.501 human voice signal of International Telecommunication Union-Telecommunication Standardization Sector ITU-T; and
> measuring a sound pressure related to the detected output voice signal based on the detected output voice signal, and calculating an acoustic characteristic parameter according to the measured sound pressure related to the detected output voice signal, so as to determine an acoustic transmission characteristic of the detected pathway;
> wherein, measuring the sound pressure related to the detected output voice signal comprises:
>
>> connecting the sound source portion through a microphone, so as to adjust and measure a sound pressure Pm of an input reference point of the sound source portion according to the specific voice signal produced by the sound source portion; and
>> measuring output sound pressures Po and Pe, or a total sound pressure P and a sound pressure of fundamental wave $P_1$ related to the detected output voice signal based on the detected output voice signal; and/or measuring, based on the detected output voice signal, a sound pressure related to the detected output voice signal and a noise pressure within a frequency range of 200Hz~8000Hz related to the detected output voice signal.

9. The detection method for acoustic transmission characteristics of building intercom system according to claim 8, **characterized in that**, the acoustic characteristic parameter comprises: overall loudness rating, frequency response, acoustic distortion, channel S/N and sidetone masking rating; wherein,
calculating an acoustic characteristic parameter according to the measured sound pressure related to the detected output voice signal comprises: adjusting a sound pressure Pm of an input reference point of the sound source portion as OdBPa according to the specific voice signal produced by the sound source portion, and driving the frequency of the specific voice signal to 510Hz or 800Hz or 1020Hz, thus measuring the total sound pressure P and the sound pressure of fundamental wave $P_1$ related to the detected output voice signal based on the detected output voice signal outputted by the detected pathway; and calculating, based on the measured total sound pressure P and the sound pressure of fundamental wave P1 related to the detected output voice signal, the acoustic distortion $\gamma$ as:

$$ \gamma = \frac{P - P1}{P} \times 100\% \, , $$

so as to determine a distortion caused by the nonlinearity of voice transmission and background noises.

10. The detection method for acoustic transmission characteristics of building intercom system according to any one of claims 8 to 9, **characterized by** comprising:

> when any one or two of the first telephone and second telephone in the detected pathway are simulated to be capable of speech by using a hands-free manner, respectively installing the first telephone and/or the second telephone making the speech by using the hands-free manner in a central position of a back board; and
> mutually adapting the size of the back board and the size of the first telephone and/or the second telephone, installed in the central position of the back board, making the speech by using the hands-free manner, so that edges of the back board is kept a certain distance, preferably a distance greater than or equal to 20cm from adjacent edges of the first telephone and/or the second telephone, installed in the central position of the back board, making the speech by using the hands-free manner.

11. The detection method for acoustic transmission characteristics of building intercom system according to claim 10, **characterized by** comprising:
when the specific voice signal is transmitted to pass through the detected pathway, producing a voice signal reflection effect through the back board on which the first telephone and/or the second telephone making the speech by using the hands-free manner is installed, so as to simulate actual installation and usage states of the first telephone and/or the second telephone having a hands-free speech capability.

12. (Original) The detection method for acoustic transmission characteristics of building intercom system according to any one of claims 8 to 11, **characterized by** comprising:
when the first telephone in the detected pathway is simulated to be capable of speech by using a handle manner, measuring the sidetone masking rating STMR of the first telephone making the speech by using a handle manner by the measuring device based on a detected output voice signal outputted by an earpiece of the handle according to the inputting of the specific voice signal as the input voice signal through a lip end of the handle and the transmitting in the detected pathway.

13. (Original) A detection system (100) for acoustic transmission characteristics of building intercom system corresponding to the detection method for acoustic transmission characteristics of building intercom system according to any one of claims 8 to 12, **characterized in that**, the detection system comprises:

a sound source portion (110) adapted to produce, by a first telephone of a detected building intercom system in a detected pathway (120), a specific voice signal, input the specific voice signal into the detected pathway as an input voice signal, transmit the specific voice signal in the detected pathway, and output the specific voice signal as a detected output voice signal; wherein, the specific voice signal comprises a P.50 simulation voice signal or a P.501 human voice signal of International Telecommunication Union-Telecommunication Standardization Sector ITU-T; and
a measuring device (130) adapted to measure a sound pressure related to the detected output voice signal based on the detected output voice signal, and a calculating device adapted to calculate an acoustic characteristic parameter according to the measured sound pressure related to the detected output voice signal, so as to determine an acoustic transmission characteristic of the detected pathway;
wherein the measuring device is connecting the sound source portion through a microphone, so as to adjust and measure a sound pressure Pm of an input reference point of the sound source portion according to the specific voice signal produced by the sound source portion; and
the measuring device measures output sound pressures Po and Pe, or a total sound pressure P and a sound pressure of fundamental wave $P_1$ related to the detected output voice signal based on the detected output voice signal; and/or the measuring device measures a sound pressure related to the detected output voice signal and a noise pressure within a frequency range of 200Hz~8000Hz related to the detected output voice signal based on the detected output voice signal.

**Patentansprüche**

1. Erfassungssystem (100) für Schallübertragungseigenschaften eines Gebäudegegensprechsystems, aufweisend zumindest einen Schallquellenabschnitt (110), einen erfassten Pfad (120), eine Messvorrichtung (130) und eine Berechnungsvorrichtung (140),
**dadurch gekennzeichnet, dass**
der Schallquellenabschnitt eingerichtet ist, ein spezifisches Sprachsignal zu erzeugen, wobei das spezifische Sprachsignal ein P.50 Simulations-Sprachsignal oder ein P.501 menschliches Sprachsignal gemäß ITU-T (International Telecommunication Union-Telecommunication Standardization Sector) aufweist;
der erfasste Pfad ein erstes Telefon, ein zweites Telefon, und eine Kommunikationsverbindung, die mit dem ersten Telefon und dem zweiten Telefon verbunden ist, in einem erstfassten Gebäudegegensprechsystem aufweist; wobei sich das erste Telefon und das zweite Telefon an einem Eingangsanschluss des erfassten Pfads bzw. einem Ausgangsanschluss des erfassten Pfads befinden, der erfasste Pfad dem Schallquellenabschnitt zugeordnet ist, zur Eingabe des spezifischen Sprachsignals in den erfassten Pfad als Eingangssprachsignal, zur Übertragung des spezifischen Sprachsignals in dem erfassten Pfad, und zur Ausgabe des spezifischen Sprachsignals als erfasstes Ausgangssprachsignal; und

die Messvorrichtung eingerichtet ist, einen Schalldruck in Zusammenhang mit dem erfassten Ausgangssprachsignal auf Grundlage des erfassten Ausgangssprachsignals zu messen; und

die Berechnungsvorrichtung eingerichtet ist, einen charakteristischen Schallparameter gemäß dem gemessenen Schalldruck in Zusammenhang mit dem erfassten Ausgangssprachsignal zu berechnen, um Schallübertragungseigenschaften des erfassten Pfads zu bestimmen; wobei die Messvorrichtung mit dem Schallquellenabschnitt durch ein Mikrofon verbunden ist, um einen Schalldruck Pm eines Eingangsbezugspunkts des Schallquellenabschnitts gemäß des von dem Schallquellenabschnitt erzeugten spezifischen Sprachsignals einzustellen und zu messen; und die Mesvorrichtung Ausgangsschalldrücke Po und Pe, oder einen Gesamtschalldruck P und einen Schalldruck einer Grundwelle $P_1$ in Zusammenhang mit dem erfassten Ausgangssprachsignal auf Grundlage des erfassten Ausgangssprachsignals misst; und/oder die Messvorrichtung einen Schalldruck in Zusammenhang mit dem erfassten Ausgangssprachsignal und einen Schalldruck innerhalb eines Frequenzbereichs von 200 Hz ~ 8000 Hz in Zusammenhang mit dem erfassten Ausgangssprachsignal auf Grundlage des erfassten Ausgangssprachsignals misst.

2. Erfassungssystem für Schallübertragungseigenschaften eines Gebäudegegensprechsystems gemäß Anspruch 1, **dadurch gekennzeichnet, dass** der Schalleigenschaftsparameter umfasst:
Gesamtlautstärkebewertung, Frequenzantwort, akustische Verzerrung, Kanal S/N und Nebengeräuschmaskierungs-Bewertung.

3. Erfassungssystem für Schallübertragungseigenschaften eines Gebäudegegensprechsystems nach einem der Ansprüche 1 bis 2, **dadurch gekennzeichnet, dass**
die Messvorrichtung den Schalldruck Pm eines Eingangsbezugspunkts des Schallquellenabschnitts als 0 dBPa gemäß dem spezifischen Sprachsignal, das von dem Schallquellenabschnitt erzeugt wird, einstellt, und die Frequenz des spezifischen Sprachsignals auf 510 Hz, 800 Hz oder 1020 Hz ansteuert, wodurch der Gesamtschalldruck P und der Schalldruck einer Grundwelle $P_1$ in Zusammenhang mit dem erfassten Ausgangssprachsignal auf Grundlage des von dem erfassten Pfad ausgegebenen, erfassten Ausgangssprachsignals gemessen werden; und
die Berechnungsvorrichtung die akustische Verzerrung $\gamma$ auf Grundlage des gemessenen Gesamtschalldrucks P und des Schalldrucks einer Grundwelle $P_1$ in Zusammenhang mit dem erfassten Ausgangssprachsignal berechnet als:

$$\gamma = \frac{P - P1}{P} \times 100\% \,,$$

um eine Verzerrung zu bestimmen, die durch die Nichtlinearität einer Sprachübertragung und den Hintergrundgeräuschen verursacht wird.

4. Erfassungssystem für Schallübertragungseigenschaften eines Gebäudegegensprechsystems nach einem der Ansprüche 1 bis 3, **dadurch gekennzeichnet, dass**
der Schallquellenabschnitt aufweist: einen akustischen Oszillator und einen künstlichen Mund, der mit dem akustischen Oszillator verbunden ist, wobei der künstliche Mund dem ersten Telefon des erfassten Pfads zu geordnet ist, und das spezifischen Sprachsignal als das Eingangssprachsignal von dem ersten Telefon über den künstlichen Mund eingegeben wird;
die Kommunikationsverbindung aufweist: einen ersten Verstärker, der mit dem ersten Telefon in dem erfassten Gebäudegegensprechsystem verbunden ist, eine Hilfsvorrichtung, die mit dem ersten Verstärker zur Übertragung verbunden ist, und einen zweiten Verstärker, der mit der Hilfsvorrichtung verbunden ist; und
der erfasste Pfad aufweist: das erste Telefon und das zweite Telefon, die entsprechend einem Nutzungsmodus während tatsächlicher Sprache installiert werden, wobei das erste Telefon das Eingangssprachsignal, das von dem künstlichen Mund eingegeben wird, empfängt und das Signal an den ersten Verstärker sendet, wobei das Eingangssprachsignal nacheinander durch den ersten Verstärker, die Hilfsvorrichtung und den zweiten Verstärker an das zweite Telefon übertragen wird, und von dem zweiten Telefon als das erfasste Ausgangssprachsignal ausgegeben wird, um so eine Sprache von dem ersten Telefon zu dem zweiten Telefon in dem erfassten Gebäudegegensprechsystem zu bilden.

5. Erfassungssystem für Schallübertragungseigenschaften eines Gebäudegegensprechsystems nach einem der Ansprüche 1 bis 4, wobei der erfasste Pfad aufweist:

wenn das erste Telefon und/oder das zweite Telefon simuliert werden, um zum Sprechen mittels eines Freisprechmodus in der Lage zu sein, das erste Telefon und/oder das zweite Telefon, die das Sprechen mittels des Freisprechmodus vornehmen, jeweils in einer mittigen Position einer Rückwand verbaut sind; und die Größe der Rückwand und die Größe des ersten Telefons und/oder des zweiten Telefons, die in der mittigen Position der Rückwand verbaut sind, und die das Sprechen mithilfe des Freisprechmodus vornehmen, aufeinander abgestimmt sind, so dass Kanten der Rückwand in einem gewissen Abstand gehalten werden, bevorzugt einem Abstand von größer gleich 20 cm zu benachbarten Kanten des ersten Telefons und/oder des zweiten Telefons, die in der mittigen Position der Rückwand verbaut sind und das Sprechen mittels des Freisprechmodus vornehmen.

6.  Erfassungssystem für Schallübertragungseigenschaften eines Gebäudegegensprechsystems nach Anspruch 5, **dadurch gekennzeichnet, dass** wenn das spezifische Sprachsignal übertragen wird, um durch den erfassten Pfad zu gelangen, ein Sprachsignalreflexionseffekt durch die Rückwand erzeugt wird, an der das erste Telefon und/oder das zweite Telefon, die zu Sprechen mittels Freisprechmodus in der Lage sind, verbaut sind, um tatsächliche Installations- und Nutzungszustände des ersten Telefons und/oder des zweiten Telefons zu simulieren, die Freisprechfähigkeit besitzen.

7.  Erfassungssystem für Schallübertragungseigenschaften eines Gebäudegegensprechsystems nach einem der Ansprüche 1 bis 6, **dadurch gekennzeichnet, dass** wenn das erste Telefon in dem erfassten Pfad dahingehend simuliert wird, zum Sprechen mittels einer Handhabeeinrichtung in der Lage zu sein, die Nebengeräuschmaskierungs-Bewertung STMR des ersten Telefons, das das Sprechen vornimmt, von der Messvorrichtung auf Grundlage eines erfassten Ausgangssprachsignals, das von einem Hörer der Handhabe ausgegeben wird gemäß der Eingabe des spezifischen Sprachsignals als Eingangssprachsignal durch ein Lippen-seitiges Ende der Handhabe, und der Übertragung in dem erfassten Pfad gemessen wird.

8.  (Original) Erfassungssystem für Schallübertragungseigenschaften eines Gebäudegegensprechsystems, **dadurch gekennzeichnet, dass** es aufweist:

    einen Schallquellenabschnitt, der, durch einen Schallquellenabschnitt (110), durch ein erstes Telefon eines erfassten Gebäudegegensprechsystems in einem erfassten Pfad (120) ein spezifisches Sprachsignal erzeugt, Eingeben des spezifischen Sprachsignals in den erfassten Pfad als Eingangssprachsignal, Übertragung des spezifischen Sprachsignals in dem erfassten Pfad, und Ausgabe des spezifischen Sprachsignals als erfasstes Ausgangssprachsignal; wobei das spezifische Sprachsignal ein P.50 Simulations-Sprachsignal oder ein P.501 menschliches Sprachsignal des ITU-T'(International Telecommunication Union-Telecommunication Standardization Sector) umfasst; und
    Messen eines Schalldrucks in Zusammenhang mit dem erfassten Ausgangssprachsignal auf Grundlage des erfassten Ausgangssprachsignals, und Berechnen eines charakteristischen Schallparameters gemäß dem gemessenen Schalldruck in Zusammenhang mit dem erfassten Ausgangssprachsignal, um Schallübertragungseigenschaften des erfassten Pfads zu bestimmen;
    wobei das Messen des Schalldrucks in Zusammenhang mit dem erfassten Ausgangssprachsignal umfasst:

    Verbinden des Schallquellenabschnitts durch ein Mikrofon, um einen Schalldruck Pm eines Eingangsbezugspunkts des Schallquellenabschnitt gemäß dem spezifischen Sprachsignal, das von dem Schallquellenabschnitt erzeugt wurde, einzustellen und zu messen; und
    Messen der Ausgangsschalldrücke Po und Pe, oder eines Gesamtschalldrucks P und eines Schalldrucks einer Grundwelle $P_1$ in Zusammenhang mit dem erfassten Ausgangssprachsignal auf Grundlage des erfassten Ausgangssprachsignals; und/oder Messen, auf Grundlage des erfassten Ausgangssprachsignals, eines Schalldrucks in Zusammenhang mit dem erfassten Ausgangssprachsignal und eines Schalldrucks innerhalb eines Frequenzbereichs von 200 Hz ~ 8000 Hz in Zusammenhang mit dem erfassten Ausgangssprachsignal.

9.  Verfahren zum Erfassen von Schallübertragungseigenschaften eines Gebäudegegensprechsystems nach Anspruch 8, **dadurch gekennzeichnet, dass** der Schalleigenschaftsparameter umfasst: Gesamtlautstärkebewertung, Frequenzantwort, akustische Verzerrung, Kanal S/N und Nebengeräuschmaskierungs-Bewertung; wobei das Berechnen eines Schalleigenschaftsparameters gemäß dem gemessenen Schalldruck in Zusammenhang mit dem erfassten Ausgangssprachsignal umfasst: Einstellen des Schalldrucks Pm eines Eingangsbezugspunkts des Schallquellenabschnitts als 0 dBPa gemäß dem spezifischen Sprachsignal, das von dem Schallquellenabschnitt erzeugt wird, und Ansteuern der Frequenz des spezifischen Sprachsignals auf 510 Hz oder 800 Hz oder 1020 Hz, wodurch der Gesamtschalldruck P und der Schalldruck der Grundwelle $P_1$ in Zusammenhang mit dem erfassten Ausgangssprachsignal auf Grundlage des von dem erfassten Pfad ausgegebenen, erfassten Ausgangssprachsignals gemessen werden; und Berechnen, auf Grundlage des gemessenen Gesamtschalldrucks P und des Schalldrucks der Grundwelle $P_1$ in Zusammenhang mit dem erfassten Ausgangssprachsignal, der akustischen Verzerrung $\gamma$ als:

$$\gamma = \frac{P - P1}{P} \times 100\%$$
,

um eine Verzerrung zu bestimmen, die durch die Nicht-Linearität von Sprachübertragung und Hintergrundgeräuschen verursacht wird.

**10.** Verfahren zum Erfassen von Schallübertragungseigenschaften eines Gebäudegegensprechsystems nach Anspruch 8 bis 9, **gekennzeichnet durch** das Umfassen:

wenn das erste Telefon und/oder das zweite Telefon in dem erfassten Pfad simuliert werden, um zum Sprechen mittels eines Freisprechmodus in der Lage zu sein, Verbauen des ersten Telefons und/oder des zweiten Telefons, die das Sprechen mittels des Freisprechmodus vornehmen, jeweils in einer mittigen Position einer Rückwand; und

gegenseitiges Aufeinander-Abstimmen der Größe der Rückwand und der Größe des ersten Telefons und/oder des zweiten Telefons, die in der mittigen Position der Rückwand verbaut sind, und die das Sprechen mithilfe des Freisprechmodus vornehmen, so dass Kanten der Rückwand in einem gewissen Abstand gehalten werden, bevorzugt einem Abstand von größer gleich 20 cm zu benachbarten Kanten des ersten Telefons und/oder des zweiten Telefons, die in der mittigen Position der Rückwand verbaut sind, und das Sprechen mittels dem Freisprechmodus vornehmen.

**11.** Verfahren zum Erfassen von Schallübertragungseigenschaften eines Gebäudegegensprechsystems nach Anspruch 10, **gekennzeichnet durch** das Umfassen:

wenn das spezifische Sprachsignal übertragen wird, um durch den erfassten Pfad zu gelangen, Erzeugen eines Sprachsignalreflexionseffekts durch die Rückwand, an der das erste Telefon und/oder das zweite Telefon, die das Sprechen mittels Freisprechmodus vornehmen, verbaut sind, um tatsächliche Installations- und Nutzungszustände des ersten Telefons und/oder des zweiten Telefons zu simulieren, die Freisprechfähigkeit besitzen.

**12.** (Original) Verfahren zum Erfassen von Schallübertragungseigenschaften eines Gebäudegegensprechsystems nach einem der Ansprüche 8 bis 11, **gekennzeichnet durch** das Umfassen:

wenn das erste Telefon in dem erfassten Pfad dahingehend simuliert wird, zu Sprechen mittels einer Handhabeeinrichtung in der Lage zu sein, Messen der Nebengeräuschmaskierungs-Bewertung STMR des ersten Telefons, das das Sprechen in einem Freihandmodus vornimmt, durch die Messvorrichtung auf Grundlage eines erfassten Ausgangssprachsignals, das von einem Hörer der Handhabe ausgegeben wird gemäß der Eingabe des spezifischen Sprachsignals als Eingangssprachsignal durch ein Lippen-seitiges Ende der Handhabe und der Übertragung in dem erfassten Pfad.

**13.** (Original) Erfassungssystem (100) für Schallübertragungseigenschaften eines Gebäudegegensprechsystems entsprechend dem Erfassungsverfahren für Schallübertragungseigenschaften eines Gebäudegegensprechsystems nach einem der Ansprüche 8 bis 12, **dadurch gekennzeichnet, dass** das Erfassungssystem aufweist:

einen Schallquellenabschnitt (110), der eingerichtet ist, durch ein erstes Telefon eines erfassten Gebäudegegensprechsystems in einem erfassten Pfad (120) ein spezifisches Sprachsignal zu erzeugen, das spezifische Sprachsignal in den erfassten Pfad als Eingangssprachsignal einzugeben, das spezifische Sprachsignal in dem erfassten Pfad zu übertragen, und das spezifische Sprachsignal als erfasstes Ausgangssprachsignal auszugeben; wobei das spezifische Sprachsignal ein P.50 Simulations-Sprachsignal oder ein P.501 menschliches Sprachsignal gemäß ITU-T (International Telecommunication Union-Telecommunication Standardization Sector) aufweist; und

eine Messvorrichtung (130), die zum Messen eines Schalldrucks in Zusammenhang mit dem erfassten Ausgangssprachsignal auf Grundlage des erfassten Ausgangssprachsignals eingerichtet ist, und eine Berechnungsvorrichtung, die zum Berechnen eines charakteristischen Schallparameters gemäß dem gemessenen Schalldruck in Zusammenhang mit dem erfassten Ausgangssprachsignal eingerichtet ist, um eine Schallübertragungseigenschaft des erfassten Pfads zu bestimmen;

wobei die Messvorrichtung den Schallquellenabschnitt durch ein Mikrofon verbindet, um einen Schalldruck Pm eines Eingangsbezugspunkts des Schallquellenabschnitts gemäß des spezifischen Sprachsignals, das von dem Schallquellenabschnitt erzeugt wird, einzustellen und zu messen; und

die Messvorrichtung Ausgangsschalldrücke Po und Pe misst, oder einen Gesamtschalldruck P und einen Schalldruck einer Grundwelle $P_1$ in Zusammenhang mit dem erfassten Ausgangssprachsignal auf Grundlage des erfassten Ausgangssprachsignals misst; und/oder die Messvorrichtung einen Schalldruck in Zusammenhang mit dem erfassten Ausgangssprachsignal und einen Schalldruck innerhalb eines Frequenzbereichs von 200 Hz ~ 8000 Hz in Zusammenhang mit dem erfassten Ausgangssprachsignal auf Grundlage des erfassten Ausgangssprachsignals misst.

## Revendications

1.  Système de détection (100) pour caractéristiques de transmission acoustiques de système d'intercommunication pour bâtiment, comprenant au moins une portion de source sonore (110), un chemin détecté (120), un dispositif de mesure (130), et un dispositif de calcul (140),

    **caractérisé en ce que**

    la portion de source sonore est apte à produire un signal vocal spécifique, dans lequel le signal vocal spécifique comprend un signal vocal de simulation P.50 ou un signal vocal humain P.501 du Secteur de la normalisation des télécommunications de l'Union Internationale des Télécommunications (IUT-T) ;

    le chemin détecté comprend un premier téléphone, un second téléphone et une liaison de communication connectée au premier téléphone et au second téléphone dans un système d'intercommunication pour bâtiment détecté ; dans lequel le premier téléphone et le second téléphone sont respectivement situés sur un terminal d'entrée du chemin détecté et sur un terminal de sortie du chemin détecté ; le chemin détecté est associé à la portion de source sonore, pour entrer le signal vocal spécifique dans le chemin détecté comme signal vocal d'entrée, transmettre le signal vocal spécifique dans le chemin détecté, et produire le signal vocal spécifique comme signal vocal de sortie détecté ;

    le dispositif de mesure est apte à mesurer une pression sonore liée au signal vocal de sortie détecté sur la base du signal vocal de sortie détecté, et

    le dispositif de calcul est apte à calculer un paramètre de caractéristique acoustique conformément à la pression sonore mesurée liée au signal vocal de sortie détecté pour déterminer des caractéristiques de transmission acoustiques du chemin détecté ;

    dans lequel le dispositif de mesure est connecté à la portion de source sonore par le biais d'un microphone, de manière à ajuster et mesurer une pression sonore Pm d'un point de référence d'entrée de la portion de source sonore conformément au signal vocal spécifique produit par la portion de source sonore, et

    le dispositif de mesure mesure des pressions sonores de sortie Po et Pe, ou une pression sonore totale P et une pression sonore d'onde fondamentale $P_1$ liée au signal vocal de sortie détecté sur la base du signal vocal de sortie détecté, et/ou le dispositif de mesure mesure une pression sonore liée au signal vocal de sortie détecté et une pression de bruit dans les limites d'une bande de fréquences de 200 Hz~8000 Hz liée au signal vocal de sortie détecté sur la base du signal vocal de sortie détecté.

2.  Système de détection pour caractéristiques de transmission acoustiques de système d'intercommunication pour bâtiment selon la revendication 1, **caractérisé en ce que** le paramètre de caractéristique acoustique comprend : la cotation de sonie d'ensemble, la réponse en fréquence, la distorsion acoustique, le rapport signal sur bruit de canal, et la cotation de masquage d'effet local.

3.  Système de détection pour caractéristiques de transmission acoustiques de système d'intercommunication pour bâtiment selon l'une quelconque des revendications 1 à 2, **caractérisé en ce que**

    le dispositif de mesure ajuste la pression sonore Pm d'un point de référence d'entrée de la portion de source sonore comme 0 dBPa conformément au signal vocal spécifique produit par la portion de source sonore, et excite la fréquence du signal vocal spécifique sur 510 Hz, 800 Hz ou 1020 Hz, mesurant ainsi la pression sonore totale P et la pression sonore d'onde fondamentale $P_1$ liée au signal vocal de sortie détecté sur la base du signal vocal de sortie détecté produit par le chemin détecté, et

    le dispositif de calcul calcule, sur la base de la pression sonore totale P mesurée et de la pression sonore d'onde fondamentale $P_1$ liée au signal vocal de sortie détecté, la distorsion acoustique $\gamma$ comme :

$$Y = \frac{P - P1}{P} \times 100\% \,,$$

de manière à déterminer une distorsion provoquée par la non-linéarité de transmission vocale et les bruits de fond.

4. Système de détection pour caractéristiques de transmission acoustiques de système d'intercommunication pour bâtiment selon l'une quelconque des revendications 1 à 3, **caractérisé en ce que**
la portion de source sonore comprend : un oscillateur acoustique et une bouche artificielle connectée à l'oscillateur acoustique, dans lequel la bouche artificielle est associée au premier téléphone du chemin détecté, et le signal vocal spécifique est entré comme signal vocal d'entrée à partir du premier téléphone via la bouche artificielle ;
la liaison de communication comprend : un premier amplificateur connecté au premier téléphone dans le système d'intercommunication pour bâtiment détecté, un dispositif auxiliaire connecté au premier amplificateur pour la transmission, et un second amplificateur connecté au dispositif auxiliaire, et le chemin détecté comprend : le premier téléphone et le second téléphone installés conformément à un mode d'utilisation durant la parole réelle, le premier téléphone recevant le signal vocal d'entrée entré par la bouche artificielle et transmettant le signal au premier amplificateur, le signal vocal d'entrée transmis au second téléphone par le biais du premier amplificateur, du dispositif auxiliaire, et du second amplificateur, de manière séquentielle, et produit comme signal vocal de sortie détecté par le second téléphone, de manière à former une parole du premier téléphone vers le second téléphone dans le système d'intercommunication pour bâtiment détecté.

5. Système de détection pour caractéristiques de transmission acoustiques de système d'intercommunication pour bâtiment selon l'une quelconque des revendications 1 à 4, dans lequel le chemin détecté comprend :

lorsque l'un quelconque des téléphones, ou les deux téléphones, parmi le premier téléphone et le second téléphone, sont simulés pour être aptes à la parole lors d'une utilisation en mode mains libres, le premier téléphone et/ou second téléphone réalisant la parole en utilisant le mode mains libres installés respectivement dans la position centrale d'un panneau arrière, et
la taille du panneau arrière et la taille du premier téléphone et/ou du second téléphone, installés dans la position centrale du panneau arrière, réalisant la parole en utilisant le mode mains libres, sont mutuellement adaptées, de sorte que des bords du panneau arrière sont maintenus à une certaine distance, de préférence à une distance supérieure ou égale à 20 cm à partir de bords adjacents du premier téléphone et/ou du second téléphone, installés dans la position centrale du panneau arrière réalisant la parole en utilisant le mode mains libres.

6. Système de détection pour caractéristiques de transmission acoustiques de système d'intercommunication pour bâtiment selon la revendication 5, **caractérisé en ce que** lorsque le signal vocal spécifique est transmis pour traverser le chemin détecté, un effet de réflexion de signal vocal est produit à travers le panneau arrière sur lequel sont installés le premier téléphone et/ou le second téléphone aptes à la parole en utilisant le mode mains libres, de manière à simuler des états d'installation et d'utilisation réels du premier téléphone et/ou du second téléphone avec une capacité à la parole en mains libres.

7. Système de détection pour caractéristiques de transmission acoustiques de système d'intercommunication pour bâtiment selon l'une quelconque des revendications 1 à 6, **caractérisé en ce que**
lorsque le premier téléphone dans le chemin détecté est simulé pour être apte à la parole en utilisant un mode à combiné, la cotation de masquage d'effet local STMR du premier téléphone réalisant la parole en utilisant le mode à combiné est mesurée par le dispositif de mesure sur la base d'un signal vocal de sortie détecté produit par un écouteur du combiné conformément à l'entrée du signal vocal spécifique comme signal vocal d'entrée par le biais d'une extrémité de lèvre du combiné et à la transmission dans le chemin détecté.

8. (Original) Procédé de détection pour caractéristiques de transmission acoustiques de système d'intercommunication pour bâtiment, **caractérisé en ce qu'**il comprend les étapes suivantes :

une portion de source sonore produisant, par une portion de source sonore (110), par un premier téléphone d'un système d'intercommunication pour bâtiment détecté dans un chemin détecté (120), un signal vocal spécifique, entrant le signal vocal spécifique dans le chemin détecté comme signal vocal d'entrée, transmettant le signal vocal spécifique dans le chemin détecté, et produisant le signal vocal spécifique comme signal vocal de sortie détecté ; dans lequel le signal vocal spécifique comprend un signal vocal de simulation P.50 ou un signal vocal humain P.501 du Secteur de la normalisation des télécommunications de l'Union Internationale des Télécommunications (IUT-T), et

mesurer une pression sonore liée au signal vocal de sortie détecté sur la base du signal vocal de sortie détecté, et calculer un paramètre de caractéristique acoustique conformément à la pression sonore mesurée liée au signal vocal de sortie détecté, de manière à déterminer une caractéristique de transmission acoustique du chemin détecté ;

dans lequel la mesure d'une pression sonore liée au signal vocal de sortie détecté comprend les étapes suivantes :

connecter la portion de source sonore par le biais d'un microphone, de manière à ajuster et mesurer une pression sonore Pm d'un point de référence d'entrée de la portion de source sonore conformément au signal vocal spécifique produit par la portion de source sonore, et

mesurer des pressions sonores de sortie Po et Pe, ou une pression sonore totale P et une pression sonore d'onde fondamentale $P_1$ liée au signal vocal de sortie détecté sur la base du signal vocal de sortie détecté, et/ou mesurer, sur la base du signal vocal de sortie détecté, une pression sonore liée au signal vocal de sortie détecté et une pression de bruit dans les limites d'une bande de fréquences de 200 Hz~8000 Hz liée au signal vocal de sortie détecté.

**9.** Procédé de détection pour caractéristiques de transmission acoustiques de système d'intercommunication pour bâtiment selon la revendication 8, **caractérisé en ce que** le paramètre de caractéristique acoustique comprend :

la cotation de sonie d'ensemble, la réponse en fréquence, la distorsion acoustique, le rapport signal sur bruit de canal, et la cotation de masquage d'effet local, dans lequel

le calcul d'un paramètre de caractéristique acoustique conformément à la pression sonore mesurée liée au signal vocal de sortie détecté comprend les étapes suivantes : ajuster une pression sonore Pm d'un point de référence d'entrée de la portion de source sonore comme 0 dBPa conformément au signal vocal spécifique produit par la portion de source sonore, et exciter la fréquence du signal vocal spécifique sur 510 Hz, 800 Hz ou 1020 HZ,

mesurant ainsi la pression sonore totale P et la pression sonore d'onde fondamentale $P_1$ liée au signal vocal de sortie détecté sur la base du signal vocal de sortie détecté produit par le chemin détecté, et calculer, sur la base de la pression sonore totale P mesurée et de la pression sonore d'onde fondamentale $P_1$ liée au signal vocal de sortie détecté, la distorsion acoustique $\gamma$ comme :

$$\gamma = \frac{P - P1}{P} \times 100\% \, ,$$

de manière à déterminer une distorsion provoquée par la non-linéarité de transmission vocale et les bruits de fond.

**10.** Procédé de détection pour caractéristiques de transmission acoustiques de système d'intercommunication pour bâtiment selon l'une quelconque des revendications 8 à 9, **caractérisé en ce qu'**il comprend les étapes suivantes :

lorsque l'un quelconque des téléphones, ou les deux téléphones, parmi le premier téléphone et le second téléphone dans le chemin détecté, sont simulés pour être aptes à la parole lors d'une utilisation en mode mains libres, installer respectivement le premier téléphone et/ou le second téléphone réalisant la parole en utilisant le mode mains libres dans la position centrale d'un panneau arrière, et

adapter de manière mutuelle la taille du panneau arrière et la taille du premier téléphone et/ou du second téléphone, installés dans la position centrale du panneau arrière réalisant la parole par une utilisation en mode mains libres, de sorte que des bords du panneau arrière sont maintenus à une certaine distance, de préférence une distance supérieure ou égale à 20 cm à partir de bords adjacents du premier téléphone et/ou du second téléphone, installés dans la position centrale du panneau arrière, réalisant la parole par une utilisation en mode mains libres.

**11.** Procédé de détection pour caractéristiques de transmission acoustiques de système d'intercommunication pour bâtiment selon la revendication 10, **caractérisé en ce qu'**il comprend les étapes suivantes :

lorsque le signal vocal spécifique est transmis pour traverser le chemin détecté, produire un effet de réflexion de signal vocal à travers le panneau arrière sur lequel sont installés le premier téléphone et/ou le second téléphone aptes à la parole en utilisant un mode mains libres, de manière à simuler des états d'installation et d'utilisation réels du premier téléphone et/ou du second téléphone présentant une capacité de parole en mains libres.

**12.** (Original) Procédé de détection pour caractéristiques de transmission acoustiques de système d'intercommunication pour bâtiment selon l'une quelconque des revendications 8 à 11, **caractérisé en ce qu'**il comprend les étapes suivantes :

lorsque le premier téléphone dans le chemin détecté est simulé pour être apte à la parole en utilisant un mode à combiné, mesurer la cotation de masquage d'effet local STMR du premier téléphone réalisant la parole en utilisant un mode à combiné par le dispositif de mesure sur la base d'un signal vocal de sortie détecté produit par un écouteur du combiné conformément à l'entrée du signal vocal spécifique comme signal vocal d'entrée par le biais d'une extrémité de lèvre du combiné et à la transmission dans le chemin détecté.

**13.** (Original) Système de détection (100) pour caractéristiques de transmission acoustiques de système d'intercommunication pour bâtiment correspondant au procédé de détection pour caractéristiques de transmission acoustiques de système d'intercommunication pour bâtiment selon l'une quelconque des revendications 8 à 12, **caractérisé en ce que** le système de détection comprend :

une portion de source sonore (110) apte à produire, par un premier téléphone d'un système d'intercommunication pour bâtiment détecté dans un chemin détecté (120), un signal vocal spécifique, entrer le signal vocal spécifique dans le chemin détecté comme signal vocal d'entrée, transmettre le signal vocal spécifique dans le chemin détecté, et produire le signal vocal spécifique comme signal vocal de sortie détecté ;
dans lequel le signal vocal spécifique comprend un signal vocal de simulation P.50 ou un signal vocal humain P.501 du Secteur de la normalisation des télécommunications de l'Union Internationale des Télécommunications (IUT-T) ; et
un dispositif de mesure (130) apte à mesurer une pression sonore liée au signal vocal de sortie détecté sur la base du signal vocal de sortie détecté, et un dispositif de calcul apte à calculer un paramètre de caractéristique acoustique conformément à la pression sonore mesurée liée au signal vocal de sortie détecté, de manière à déterminer une caractéristique de transmission acoustique du chemin détecté ;
dans lequel le dispositif de mesure connecte la portion de source sonore par le biais d'un microphone, de manière à ajuster et mesurer une pression sonore Pm d'un point de référence d'entrée de la portion de source sonore conformément au signal vocal spécifique produit par la portion de source sonore, et
le dispositif de mesure mesure des pressions sonores de sortie Po et Pe, ou une pression sonore totale P et une pression sonore d'onde fondamentale $P_1$ liée au signal vocal de sortie détecté sur la base du signal vocal de sortie détecté, et/ou le dispositif de mesure mesure une pression sonore liée au signal vocal de sortie détecté et une pression de bruit dans les limites d'une bande de fréquences de 200 Hz~8000 Hz liée au signal vocal de sortie détecté sur la base du signal vocal de sortie détecté.

<u>100</u>

Fig. 1

Fig. 2A

Fig. 2B

Fig. 2C

Fig. 2D

100

1201

1102

HZ

1101

1103

1201

1300

130

140

1202

1204

1203

120

Equalize P.50
or P.501

Fig. 2E

100

130

140

1300

1205

1103

1202

1206

1204

1101

1203

1201

≥ 20cm

Fig. 3

400

```
        ┌─────────┐
        │  Start  │
        └────┬────┘
             │
             ▼
┌────────────────────────────────────────────┐
│ Input a sound source of P.50 or P.501 and   │
│ measure                                      │
│ the sound pressure and STMR and the like     │
│                   410                        │
└────────────────────┬───────────────────────┘
                     │
                     ▼
┌────────────────────────────────────────────┐
│ Acquire acoustic transmission characteristics│
│ based                                        │
│ on the analysis and calculation of the measured│
│ sound pressure and the like                   │
│                   420                        │
└────────────────────┬───────────────────────┘
                     │
                     ▼
             ┌─────────┐
             │   End   │
             └─────────┘
```

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012093352 A1